# EUROPEAN PATENT SPECIFICATION

(11) **EP 4 425 293 B1**
(45) Date of publication and mention of the grant of the patent: **07.10.2026**
(21) Application number: 23165592.9
(22) Date of filing: 30.03.2023
(51) Int. Cl.: G05D 1/644, G05D 1/246, G01C 21/34, G05D 109/18

(54) **TECHNIQUE OF PATH PLANNING FOR A MOBILE NON-CIRCULAR ROBOT**
VERFAHREN ZUR WEGPLANUNG FÜR EINEN MOBILEN NICHTKREISFÖRMIGEN ROBOTER
TECHNIQUE DE PLANIFICATION DE TRAJET POUR UN ROBOT MOBILE NON CIRCULAIRE

(30) Priority: 28.02.2023 EP 23159114
(43) Date of publication of application: 04.09.2024
(73) Proprietor: Siemens Healthineers AG, 91301 Forchheim (DE)
(72) Inventor: Masannek, Marco, 90461 Nürnberg (DE)
(74) Representative: Siemens Healthineers Patent Attorneys

(56) References cited:
- SAMANIEGO RICARDO ET AL: "Path Planning for Non-Circular, Non-Holonomic Robots in Highly Cluttered Environments", vol. 17, no. 8, 15 August 2017 (2017-08-15), CH, pages 1876, XP093076461, ISSN: 1424-8220, Retrieved from the Internet <URL:https://doi.org/10.3390/s17081876> DOI: 10.3390/s17081876
- DAKULOVIC MARIJA ET AL: "Efficient navigation for anyshape holonomic mobile robots in dynamic environments", 2013 IEEE/RSJ INTERNATIONAL CONFERENCE ON INTELLIGENT ROBOTS AND SYSTEMS(ROS), IEEE, 3 November 2013 (2013-11-03), pages 2644 - 2649, XP032537303, ISSN: 2153-0858, [retrieved on 20131226], DOI: 10.1109/IROS.2013.6696729

## Description

The present invention relates to path control for navigation of a mobile robot. In particular, the invention refers to a method of path planning for a mobile non-circular robot in an environment with obstacles, like furniture, laboratory equipment, walls, desks, and the like, and further refers to a computing device for such path planning, for a system and a computer program product.

Navigation of robots is conventionally solved using graph search algorithms (e.g., Dijkstra, A*). Most state-of-the-art navigation planners utilize the heuristics of A* or D* as described in [2] to reduce overall planning time. To represent non-circular vehicles, some approaches build a 3D costmap of the environment by projecting the actual footprint into the 2D grid. [4] uses a pre-computed 3d map and a lattice planner to plan kinodynamically feasible paths for non-holonomic robots in highly cluttered environments. However, the number of possible movements for, e.g., differential robots is much lower than for holonomic drive types.

Conventionally, an environment representation in the form of an x-y grid map is used, each cell (and/or node) of which is associated with a cost value that indexes obstacles in the immediate vicinity.

For robots with a round (also denoted as circular) floor plan, a 2D grid map is sufficient, whose cells with obstacles are assigned lethal costs and are thus uniquely identifiable. By means of a subsequent artificial enlargement of these "lethal cells" by the radius of the robot's ground plan circle, cells which do not themselves contain an obstacle, but which would lead to a collision due to the distance to lethal cells being too small, can be marked as a "lethal perimeter". These cells are thus also inaccessible to the robot, i.e., its center cannot be on this cell without a collision. All other cells are accessible without collision and can therefore be used for path planning. During path planning (x-y positions), the constant distance to obstacles can even eliminate the need to determine the orientation.

For non-circular (e.g., elongated) robots, the conventional concept cannot be implemented in the same way, since the minimum required distance to obstacles depends on the orientation of the robot. In narrow places, the dependence on the orientation of the robot even leads to the so-called "piano mover's problem". This problem describes the situation during a move when, for example, a couch has to be transported through a door frame. Of course, it won't fit through crosswise, but it usually does lengthwise. The challenge is then to find a collision-free trajectory (x-y positions and orientation of the kinematic center).

To reduce the computational effort for holonomic robots, [3] introduces collision-free orientation intervals for each x-y position, with the graph search traversing along intersecting intervals. To react to dynamic environments, [7] proposes efficient methods of partially updating changed sections of the map.

In all these conventional path planning algorithms, the computational effort for map generation and path planning is significantly increased for non-circular robots as compared to circular robots. Moreover, the conventional path planning algorithms require significant time resources and are thus not suitable for real-time (also denoted as online) path planning.

The publication ""Path Planning for Non-Circular, NonHolonomic Robots in Highly Cluttered Environments" (SAMANIEGO RICAR0O ET AL, SENSORS, vol. 17, no. 8, 15 August 2017, page 1876, XP093076461, CH, ISSN: 1424-8220, 001: 10.3390/s17081876) presents an algorithm for path planning of non-circular, non-holonomic robots in highly cluttered environments. It utilizes a precomputed three-dimensional obstacle map that explicitly accounts for the robot's exact footprint in different orientations. This enables motion planning in an (x, y, θ) space.

The paper "Efficient navigation for anyshape holonomic mobile robots in dynamic environments" (AKULOVIC MARIJA ET AL; 2013 IEEE/RSJ INTERNATIONAL CONFERENCE ON INTELLIGENT ROBOTS AN0 SYSTEMS(ROS), IEEE, 3 November 2013, pages 2644-2649, XP032537303, ISSN: 2153-0858, 001: 10.1109/IROS.2013.6696729) presents a novel navigation strategy for holonomic robots with arbitrary footprints, particularly suited for transportation tasks in dynamic environments. The approach combines discrete and continuous techniques for efficient path planning and motion execution. Instead of considering all possible orientations separately, collision-free orientations are grouped into orientation intervals, significantly reducing the search space while preserving essential information. A graph-based planning method represents the free space compactly, enabling fast updates in dynamic scenarios. The motion execution relies on Receding Horizon Control (RHC) to generate smooth and stable trajectories, ensuring online adaptability.

It is therefore an object of the present invention to provide a solution for planning a path for a mobile non-circular robot in the presence of obstacles such that the planned path is collision-free, orientation-optimized and stress reduced. Alternatively or in addition, there is a need for a short planning time, and more generally for saving resources during the planning, for a path of a mobile non-circular robot in an environment with obstacles. Further alternatively or in addition, there is a need for improved spatial resolution of path planning.

This object is solved by a method of path planning for a mobile non-circular robot in an environment comprising obstacles, by a computing device, by a system, and by a computer program (and/or computer program product) according to the appended independent claims. Advantageous aspects, features and embodiments are described in the dependent claims and in the following description together with advantages.

In the following, the solution according to the invention is described with respect to the claimed method of path planning for a mobile non-circular robot in an environment comprising obstacles as well as with respect to the claimed computing device. Features, advantages, or alternative embodiments herein can be assigned to the other claimed objects (e.g., the system, the computer program or a computer program product, and/or a computer-readable storage medium) and vice versa. In other words, claims for the computing device and the system can be improved with features described or claimed in the context of the method. In this case, the functional features of the method are embodied by structural units of the computing device and the system and vice versa, respectively.

As to a method aspect, a (in particular computer-implemented) method of path planning for a mobile non-circular robot in an environment comprising obstacles is provided. The method comprises a step of receiving a three-dimensional (3D) costmap. The 3D costmap comprises a two-dimensional (2D) map of a plane, in which a mobile non-circular robot is movable. The 3D costmap further comprises a cost value, for each position on the 2D map, indicative of a cost of a positioning, and/or a movement, of the mobile non-circular robot in the presence of one or more obstacles in a predetermined environment of the position. The positioning and/or movement comprises an orientation of the mobile non-circular robot. The method further comprises a step of receiving a start position and an end position of the mobile non-circular robot on the 3D costmap. The start position comprises a start orientation of the mobile non-circular robot. The end position comprises an end orientation of the mobile non-circular robot. The method further comprises a step of iteratively selecting consecutive positions for a path to be planned, starting at the received start position and terminating at the received end position. The iteratively selecting comprises minimizing a cumulative cost value of the consecutive positions. The cumulative cost value comprises a sum of the cost values of the consecutive positions **(e.g.,** according to the received 3D costmap). The cumulative cost value further comprises a stress value. The stress value may be indicative of a change in a movement direction along the planned path. The method still further comprises a step of outputting the planned path based on the iteratively selected consecutive positions.

By the inventive technique, the planning of a collision-free path for the mobile non-circular robot can be performed faster (and/or can have a shorter planning time), and/or with a higher precision, than conventionally. The inventive technique in particular enables real-time path planning based on the (e.g., previously generated, stored, and/or existing) 3D costmap.

Alternatively or in addition, the planning of a collision-free path can optimize the path planning including the orientation of the mobile non-circular (e.g., holonomic) robot.

A mobile non-circular robot (hereinafter briefly also: mobile robot, non-circular robot, non-round robot, and/or robot) may also be denoted as "any shape" robot (or anyshape robot). The non-circular property, and/or the shape, of the robot may refer to a footprint of the robot. Alternatively or in addition, the footprint of the robot may correspond to, or may comprise, a projection of the robot onto the plane, in which the robot is movable.

The mobile non-circular robot may comprise a robot with a non-circular footprint, e.g., a rectangular footprint and/or an elongated footprint. Alternatively or in addition, the mobile non-circular robot may comprise means for moving across the plane. The means may, e.g., comprise one or more, in particular four, (e.g., mecanum) wheels, one or more rollers, and/or one or more continuous tracks. Each (e.g., mecanum) wheel, roller, and/or continuous track may comprise a drivetrain, an engine and/or a powertrain.

The powertrain may comprise the drivetrain and the engine (also denoted as motor).

The combination of position and orientation of the mobile non-circular robot may be denoted as pose.

The (e.g., full) environment may comprise a, e.g., closed, room (also denoted as space). E.g., the environment may comprise a laboratory (briefly also: lab) space, and/or a factory floor (also denoted as shop floor).

The predetermined environment of the position may comprise a part, and/or a sector, of the (e.g., full) environment, and/or a vicinity of the (e.g., full) environment. A radius, and/or spatial extension from the position, of the predetermined environment may correspond to, or be larger than, a maximal distance of a convex hull of the robot footprint from a rotation axis, e.g., through the center of mass, of the robot.

The plane may also be denoted as floor space (briefly also: floor).

The 2D map of the plane may comprise a grid. Each node of the grid may comprise a position, e.g., of a center of mass, of the mobile non-circular robot.

A position, and/or a node of the grid, may alternatively be denoted as (e.g., center of a) cell.

The start position (and/or starting position, briefly also: start) may comprise a set of initial coordinates, and/or a start node (also denoted as initial node), on the 3D costmap (which may briefly also be denoted as costmap). Alternatively or in addition, the end position (and/or ending position, briefly: end; also denoted as final position; terminal position; target position, briefly: target; and/or goal position, briefly: goal) may comprise a set of final coordinates, and/or an end node (also denoted as final node, target node, and/or terminal node).

The iteratively selecting of consecutive positions may comprise iteratively selecting nodes on the grid.

The stress value may increase when a direction of the planned path changes. Alternatively or in addition, the stress value may increase when the orientation of the mobile non-circular robot changes. Further alternatively or in addition, the stress value may increase when a velocity (also denoted as speed), and/or an acceleration, of the mobile non-circular robot changes. E.g., a change in a movement direction may include (and/or necessitate) one or more changes in the robot's velocity and/or the robot's acceleration.

A change in the orientation of the mobile non-circular robot may comprise a rotation around a vertical axis of the robot, e.g., passing through a center of mass of the robot.

A (e.g., change in) orientation of the mobile non-circular robot may be denoted as yaw. A yaw across multiple orientations may occur at one position, and/or at one node on the grid. Alternatively or in addition, a yaw may comprise a successive change of orientations across, e.g., multiple, (in particular consecutive) positions, and/or across, e.g., multiple, (in particular consecutive) nodes on the grid.

The output of the planned path (which may also be denoted as planned trajectory, briefly: trajectory, and/or as graph) may comprise a digital dataset. The digital dataset (and/or the output) may comprise a set of changes in the movement direction, a set of speeds (and/or velocities) associated with any (e.g., the start and one or more consecutive) positions along the planned path, and/or an efficiency score (e.g., the cumulative cost value) associated with the planned path.

The output of the planned path may comprise a maze-like map in the presence of many obstacles impeding a, e.g., straight, path.

The 2D map of the plane may comprise a grid. The 2D map comprising the grid may also be denoted as 2D grid map. Nodes (also denoted as cells) on the grid may comprise selectable positions (e.g., of the center of mass of the robot).

The 3D costmap may comprise a natural number N of copies per node of the grid. Each copy may comprise a differently rotated orientation of the mobile non-circular robot, in particular rotated by a fraction k/N of the full angle, 2πk/N, for any integer (and/or natural number) k less than N.

The step of iteratively selecting consecutive positions may comprise applying a greedy search algorithm. The greedy search algorithm may comprise an A-star (A*) algorithm. Alternatively or in addition, the greedy search algorithm may comprise a Dijkstra's algorithm. Further alternatively or in addition, the greedy search algorithm may comprise a D-star-Lite (D*-Lite) algorithm.

The method may further comprise a step of generating the 3D costmap. Alternatively or in addition, the method may further comprise a step of updating the 3D costmap responsive to a change in positions of one or more obstacles.

The generating of the 3D costmap may be initiated with an unknown cost value of a position.

The method may still further comprise a step of executing, by the mobile non-circular robot, the output planned path.

The mobile non-circular robot may comprise a holonomic robot.

Alternatively or in addition, the mobile non-circular robot may comprise a non-holonomic robot. Further alternatively or in addition, the mobile non-circular robot may comprise a redundant robot.

Holonomic, non-holonomic and redundant may refer to relationships between the number of controllable degrees of freedom and the total number of degrees of freedom of the mobile non-circular robot.

The number of degrees of freedom of the mobile non-circular robot may depend on a transport mode, and/or on a charge (e.g., comprising goods for transport) of the mobile non-circular robot.

Holonomic may refer to the number of controllable degrees of freedom being equal to the total number of degrees of freedom of the robot.

Non-holonomic may refer to the number of controllable degrees of freedom being less than the total number of degrees of freedom of the robot.

Redundant may refer to the number of controllable degrees of freedom being greater than the total number of degrees of freedom of the robot.

The 3D costmap is based on a convex hull of a footprint of the mobile non-circular robot onto the 2D map of the plane. The 3D costmap is further based on a predetermined safety area around the convex hull.

The predetermined safety area may take into account uncertainties in the movement of the robot, in particular at high speeds, and/or at high accelerations.

The cost value (e.g., per position, which may also be denoted as cell cost) may briefly also be denoted as cost.

The cumulative cost value may further increase with a change of orientation of the mobile non-circular robot. Alternatively or in addition, the cumulative cost value may further increase with a veering away from the end position, and/or from the start position. Further alternatively or in addition, the cumulative cost value may further increase with a repeated traversal of a position along the planned path.

The 3D costmap may further comprise a height constraint in relation to the height of the mobile non-circular robot.

The (e.g., lab, and/or factory) environment may comprise one or more installations (e.g., a workbench, and/or devices mounted at a wall, and/or at the ceiling), which do not (or at least not fully) take up floor space but comprise obstacles in a predetermined height above the floor space. E.g., by the height constraint the mobile non-circular robot may be enabled to make use of floor space with installations only taking up space above the height of the mobile non-circular robot.

Alternatively or in addition, the mobile non-circular robot may be configured for passing below obstacles.

Determining the cumulative cost value may comprise performing a weighted sum of the cost values.

As to a device aspect, a computing device for path planning for a mobile non-circular robot in an environment comprising obstacles is provided. The computing device comprises a 3D costmap receiving interface configured for receiving a 3D costmap. The 3D costmap comprises a 2D map of a plane, in which a mobile non-circular robot is movable. The 3D costmap further comprises a cost value, for each position on the 2D map, indicative of a cost of a positioning, and/or a movement, of the mobile non-circular robot in the presence of one or more obstacles in a predetermined environment of the position. The positioning and/or movement comprises an orientation of the mobile non-circular robot. The computing device further comprises a start and end positions receiving interface configured for receiving a start position and an end position of the mobile non-circular robot on the 3D costmap. The start position comprises a start orientation of the mobile non-circular robot. The end position comprises an end orientation of the mobile non-circular robot. The computing device further comprises a consecutive positions selecting module configured for iteratively selecting consecutive positions for a path to be planned, starting at the received start position and terminating at the received end position. The iteratively selecting comprises minimizing a cumulative cost value of the consecutive positions. The cumulative cost value comprises a sum of the cost values of the consecutive positions (e.g., according to the received 3D costmap). The cumulative cost value further comprises a stress value. The stress value may be indicative of a change in a movement direction along the planned path. The computing device still further comprises a planned path outputting interface configured for outputting the planned path based on the iteratively selected consecutive positions.

The computing device may be further configured to perform any one of the steps, or comprise any one of the features, of the method according to the method aspect.

As to a system aspect, a system for path planning for a mobile non-circular robot in an environment comprising obstacles is provided. The system comprises a computing device according to the device aspect and a mobile non-circular robot.

Alternatively or in addition, the computing device may be (e.g., physically) located at, and/or comprised in the mobile non-circular robot.

The mobile non-circular robot may comprise at least one mecanum wheel, in particular four mecanum wheels.

The mecanum wheel (also denoted as Swedish wheel or Ilon wheel) may comprise an omnidirectional wheel design.

The mecanum wheel may comprise a series of rubberized external rollers obliquely (e.g., at 45 degree, briefly also: 45 deg, and/or 45°, to the mecanum wheel's axle line) attached to the (e.g., entire, and/or whole) circumference of the mecanum wheel's rim. Alternatively or in addition, the mecanum wheel may comprise a drivetrain, an engine and/or a powertrain.

Each mecanum wheel of the robot may be independently moved.

The mobile non-circular robot may comprise at least one sensor for collision avoidance.

The sensor for collision avoidance may indicate, and/or may detect, a potential collision. Based on an indicated, and/or detected, potential collision, executing the output planned path may be interrupted, and/or stopped. E.g., a new path based on the stop position may be planned.

As to a further aspect, a computer program product is provided. The computer program product comprises program elements which induce a computing device (e.g., according to the device aspect) to carry out, when the program elements are loaded into a memory of the computing device, the steps of the method for path planning for a mobile non-circular robot in an environment comprising obstacles according to the method aspect.

As to a still further aspect, a computer-readable medium is provided. On the computer-readable medium, program elements are stored that can be read and executed by a computing device (e.g., according to the device aspect), in order to perform, when the program elements are executed by the computing device, steps of the method for path planning for a mobile non-circular robot in an environment comprising obstacles according to the method aspect.

The properties, features, and advantages of this invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

- Fig. 1: is a flow chart of a method of path planning for a mobile non-circular robot in an environment comprising obstacles according to a preferred embodiment of the present invention;
- Fig. 2: is an overview of the structure and architecture of a computing device for path planning for a mobile non-circular robot in an environment comprising obstacles according to a preferred embodiment of the present invention;
- Figs. 3A and 3B: schematically illustrate an example of a mobile non-circular robot in perspective and top view, respectively, which robot may be configured to perform the method of Fig. 1, and/or may comprise a computing device of Fig. 2;
- Fig. 4: schematically illustrates a floor plan as environment comprising obstacles, which obstacles may be embodied by walls;
- Fig. 5: shows a first schematic illustrative example of a planned path, in which a mobile non-circular robot, e.g., the robot of Figs. 3A and 3B, collides with an obstacle near the end position;
- Fig. 6: shows a second schematic illustrative example of a planned path, in which a mobile non-circular robot, e.g., the robot of Figs. 3A and 3B, collides multiple times with obstacles along the planned path;
- Figs. 7A and 7B: show a third and a fourth illustrative example of a planned path, in which a mobile non-circular robot, e.g., the robot of Figs. 3A and 3B, collides with obstacles when trying to reach the end orientation;
- Figs. 8A, 8B and 8C: schematically illustrate components of the 3D costmap, which comprise a mobile non-circular robot, e.g., the robot of Figs. 3A and 3B, at the same positions but with the orientation rotated along a, in particular center-of-mass, axis of the robot;
- Figs. 9A and 9B: schematically illustrate the orientation-dependence of the cost value per position on the 3D costmap for two different orientations of a mobile non-circular robot, e.g., the robot of Figs. 3A and 3B;
- Fig. 10: schematically illustrates a first example of a collision-free planned path for a mobile non-circular robot, e.g., the robot of Figs. 3A and 3B, which path may be planned according to the inventive technique comprising the method of Fig. 1, and/or the computing device of Fig. 2;
- Fig. 11: schematically illustrates a second example of a collision-free planned path for a mobile non-circular robot, e.g., the robot of Figs. 3A and 3B, which path may be planned according to the inventive technique comprising the method of Fig. 1, and/or the computing device of Fig. 2; and
- Figs. 12A and 12B: schematically illustrate a third and fourth example of a collision-free planned path for a mobile non-circular robot, e.g., the robot of Figs. 3A and 3B, having the same end position on a 2D map of a plane but with different orientations, which path may be planned according to the inventive technique comprising the method of Fig. 1, and/or the computing device of Fig. 2.

Any reference signs in the claims should not be construed as limiting the scope.

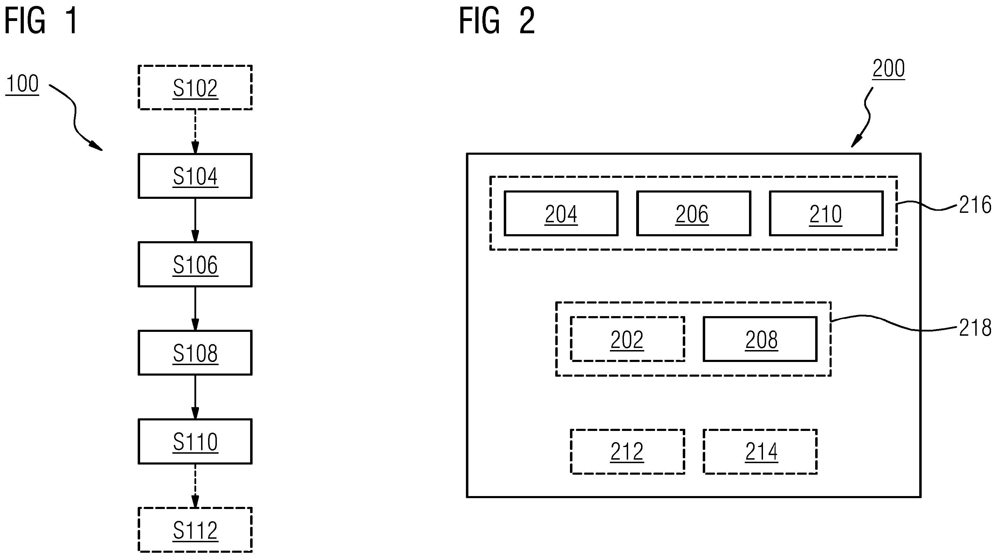

Fig. 1 schematically illustrates a flowchart for a (in particular computer-implemented) method of path planning for a mobile non-circular robot in an environment comprising obstacles. The method is generally referred to by the reference sign 100.

The method 100 comprises a step S104 of receiving a three-dimensional (3D) costmap. The 3D costmap comprises a two-dimensional(2D) map of a plane, in which a mobile non-circular robot is movable. The 3D costmap further comprises a cost value, for each position on the 2D map, indicative of a cost of a positioning, and/or a movement, of the mobile non-circular robot in the presence of one or more obstacles in a predetermined environment of the position. The positioning and/or movement comprises an orientation of the mobile non-circular robot.

The method 100 further comprises a step S106 of receiving a start position and an end position of the mobile non-circular robot on the 3D costmap. The start position comprises a start orientation of the mobile non-circular robot. The end position comprises an end orientation of the mobile non-circular robot.

The method 100 further comprises a step S108 of iteratively selecting consecutive positions for a path to be planned, starting at the received S106 start position and terminating at the received S106 end position. The iteratively selecting S108 comprises minimizing a cumulative cost value of the consecutive positions. The cumulative cost value comprises a sum of the cost values of the consecutive positions (e.g., according to the received S104 3D costmap). The cumulative cost value further comprises a stress value. The stress value may be indicative of a change in a movement direction along the planned path.

The method 100 still further comprises a step S110 of outputting the planned path based on the iteratively selected S108 consecutive positions.

Optionally, the method 100 comprises a step S102 of generating the 3D costmap. Alternatively or in addition, the method 100 may comprise a step (not shown in Fig. 1) of updating the 3D costmap responsive to a change in positions of one or more obstacles.

Further optionally, the method 100 comprises a step S112 of executing, by the mobile non-circular robot, the output S110 planned path.

Fig. 2 schematically illustrates an architecture of a computing device for path planning for a mobile non-circular robot in an environment comprising obstacles. The computing device is generally referred to by the reference sign 200.

The computing device 200 comprises a 3D costmap receiving interface 204 configured for receiving a 3D costmap. The 3D costmap comprises a 2D map of a plane, in which a mobile non-circular robot is movable. The 3D costmap further comprises a cost value, for each position on the 2D map, indicative of a cost of a positioning, and/or a movement, of the mobile non-circular robot in the presence of one or more obstacles in a predetermined environment of the position. The positioning and/or movement comprises an orientation of the mobile non-circular robot.

The computing device 200 further comprises a start and end positions receiving interface 206 configured for receiving a start position and an end position of the mobile non-circular robot on the 3D costmap. The start position comprises a start orientation of the mobile non-circular robot, and wherein the end position comprises an end orientation of the mobile non-circular robot.

The computing device 200 further comprises a consecutive positions selecting module 208 configured for iteratively selecting consecutive positions for a path to be planned, starting at the received start position and terminating at the received end position. The iteratively selecting comprises minimizing a cumulative cost value of the consecutive positions. The cumulative cost value comprises a sum of the cost values of the consecutive positions (e.g., according to the received 3D costmap). The cumulative cost value further comprises a stress value. The stress value may be indicative of a change in a movement direction along the planned path.

The computing device 200 still further comprises a planned path outputting interface 210 configured for outputting the planned path based on the iteratively selected consecutive positions.

Optionally, the computing device 200 comprises a 3D costmap generating module 202 configured for generating the 3D costmap. Alternatively or in addition, the computing device 200 may comprise a 3D costmap updating module (not shown in Fig. 2) configured for updating the 3D costmap responsive to a change in positions of one or more obstacles.

Further optionally, the computing device 200 comprises a planned path executing module 212 configured for executing, by the mobile non-circular robot, the output planned path.

The computing device 200 may further comprise a memory 214.

Any one of the 3D costmap receiving interface 204, the start and end positions receiving interface 206, and the planned path outputting interface 210 may be comprised in a (e.g., common) input-output interface 216.

The consecutive positions selecting module 208, and optionally the 3D costmap generating module 202, may be comprised in, and/or implemented by, a processor 218 (e.g., a central processing unit, CPU, and/or a graphics processing unit, GPU).

The computing device 200 may be configured for performing the method 100.

A system may comprise the computing device 200 and the mobile non-circular robot. Alternatively or in addition, the computing device 200 may be comprised in the mobile non-circular robot.

The ROS Navigation stack [1] is a commonly used software package that tackles navigation problems for mobile robots. However, its underlying environmental representation in the form of a two-dimensional (2D) costmap (and/or a 2D grid) is only well suited for circular robots (also denoted as round robots), where the minimum distance between the robot's center of rotation (and/or base link) and obstacles is constant. The constant minimum distance relaxes the problem of collision checks for a pose (e.g., comprising x-y position and orientation), as the orientation does not affect whether the round robot's base link can be on a specific x-y position.

With most industrial goods having a more rectangular (and/or elongated) shape, robots transporting such goods must use a more detailed representation of the environment that accounts for the robot's orientation, especially in crowded environments.

According to the inventive technique (e.g., comprising the method 100, the computing device 200, and/or the system comprising the computing device 200 and the mobile non-circular robot), computing resources may be saved, and/or the iterative selection S108 of consecutive positions for the path planning (also denoted as graph search) and the cumulative cost value (also denoted as cost calculation) can be optimized, in particular to allow for online (and/or real-time) performance (e.g., calculation) on the robot. The inventive technique provides a solution, which can reduce the computational effort for any one of the cases, while also proposing to integrate "comfort" factors to the path planning (also denoted as path generation, and/or graph search), such as a reduction of directional changes, and/or the preferred orientation (also denoted as heading) of the robot during the path.

The inventive technique may also be denoted as technique for free path planning for (in particular omnidirectional) non-round (and/or non-circular) robots in a previously mapped environment. Alternatively or in addition, the inventive technique may further be denoted as technique for collision-free and orientation-optimized path planning for anyshape (e.g., holonomic) robots. The inventive technique may, e.g., comprise an algorithm for performing the method 100. The algorithm may briefly be denoted as "HunGreedy".

The inventive technique (e.g., comprising the algorithm, the method 100, the computing device 200, and/or the system comprising the computing device 200 and the mobile non-circular robot) for path planning for non-circular (in particular holonomic) robots may utilize the commonly used grid-map representation of the environment to create a 3D costmap that encodes the (e.g., true) cost of a node (and/or cell) for an oriented anyshape robot regarding collisions and proximity to Obstacles. The 3D costmap may then be traversed using a customized implementation of known graph-search algorithms like A* or D*-Lite.

The inventive technique uses a novel approach (e.g., in terms of the cumulative cost value) to reward the progress towards the goal (and/or end position), as well as using a preferred orientation along the path and change of directions (e.g., corresponding to stress), therefore producing paths that are collision-free, orientation-optimized and stress reduced. The name HunGreedy of the inventive algorithm may resemble the characteristics of the implementation, which may be resource hungry when generating the 3D costmap (also denoted as pre-calculations, and/or used data structures), but may lead to short planning times due to a greedy search approach.

The environment representation in the form of the 2D grid can be further used as a basis because it is independent from the robot model. For the individual (in particular non-circular) robot, however, the data basis needs to be extended. The goal is to create a 3D grid map whose third dimension describes the robot orientation from 0 degrees to 359 degrees (and/or in the interval of [0,2π)). In other words, N (= 360 degrees/angle resolution, and/or 2π/angle resolution) x-y grid maps are generated. For this purpose, the rotated (e.g., about an axis passing through the center of mass of the robot) footprints of the (in particular non-circular) robot are first determined by projecting the non-circular robot footprint (also denoted as robot floor plan) into the grid area and multiplied (and/or rotated) N times by the parameterizable angular resolution (e.g., 1 degrees). By forming the respective convex hull, for each orientation, all the occupied nodes (and/or occupied cells) of the original 2D grid map can be determined. The cost values of the individual nodes (and/or individual cells) are summed up (and, e.g., normalized), so that also each 3D node (and/or 3D cell) is assigned a cost value, which indicates the proximity to obstacles. When a lethal node (and/or lethal cell) is detected, the 3D node (and/or 3D cell) is also marked as lethal. Using the 3D costmap (also denoted as "augmented cost map") created in this way, path planning (also denoted as graph search) algorithms may be used to find a, in particular collision-free, path between two poses (e.g., comprising position, in particular of the center of mass of the robot, and orientation of the robot) for a non-circular (also denoted as non-round) robot, if such a path exists. For the evaluation and exploitation of new nodes (and/or new cells) during the path planning (and/or the step S108 of iteratively selecting consecutive positions, also denoted as search), different parameters may be taken into account individually, or (at least partially) jointly.

Firstly, a kinematic model (also denoted as motion model) may be taken into account. In omnidirectional (and/or holonomic) robots, a movement can occupy 1-3 dimensions. Accordingly, per search iteration, M new nodes (and/or new cells) can be opened up, where M is (3*3! - 1 = 17) with complete freedom of movement, if per movement step, the robot can be advanced by the value 1 (and/or -1). By constraining the motion model (and/or the kinematic model), the value M may be reduced (e.g., for Differential and/or Ackermann steering geometries), making the approach optionally adaptable to non-holonomic robots.

Secondly, a potential may be taken into account. Movements that move away from the end position (also denoted as target) are usually worse to evaluate, since they promise less success. Exceptions comprise, e.g., mazes, which, however, also lead to a development through the maze in the long run by tapping lethal nodes (and/or lethal cells) in the direction of the end position (and/or goal).

Thirdly, an effectiveness (and/or efficiency) may be taken into account. Movements, which move frequently around a specific position, are to be evaluated likewise badly, since no (e.g., real) progress is determinable.

Fourthly, a stress value may be taken into account. Movements that allow paths (also denoted as trajectories) with few changes of direction may be rated well. The stress value (also denoted as stress rating) favors smooth and natural movements, although more "jerky" paths may be possible. This may be particularly relevant in case the robot moves at a high speed, and/or whenever the effect of inertia becomes relevant.

Fifthly, safety areas (also denoted as protective fields) may be taken into account. Autonomous robots are usually equipped with safety areas (and/or protective fields), which are not directly part of the robot footprint (and/or robot floor plan) but can restrict the robot's freedom of movement. (E.g., Virtual) collisions with the safety areas (and/or protective fields) may be planned in advance and avoided. Including safety areas (and/or protective fields) in the path planning has an effect on the stress value of the path. E.g., safety areas (and/or protective fields) may be required to compensate for effects of inertia of a robot moving at high momentum.

By the inventive technique, the basic data structure is extended compared to the conventional navigation approach as, e.g., in ROS [1]. Alternatively or in addition, the inventive technique extends the kinematic model to holonomic robots compared to the previous approach of [4]. Further alternatively or in addition, the stress value (and/or stress determination) of the planned path (and/or the trajectory) at path planning time, and/or the safety area (and/or protective field) integration in the stress value (and/or determination) is unique to the inventive technique.

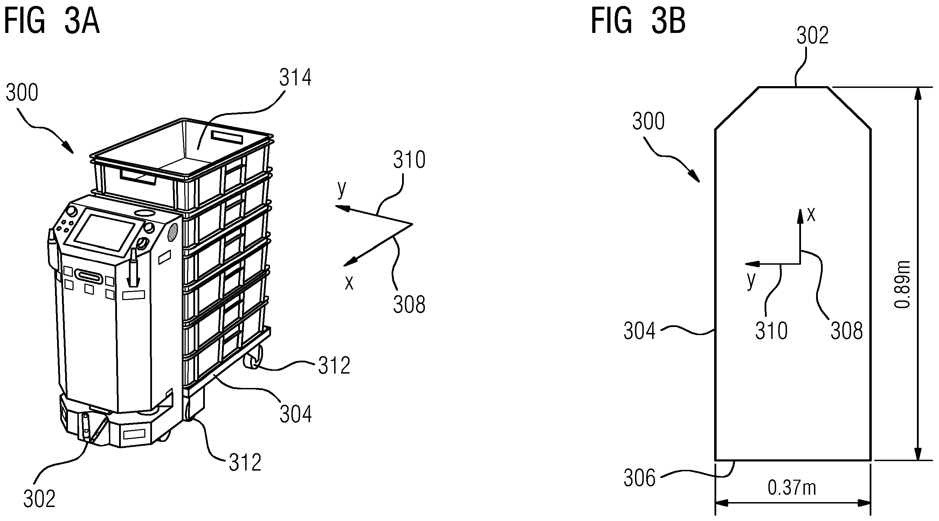

Figs. 3A and 3B schematically illustrate an example of a mobile non-circular robot 300. The robot 300 of the illustrative example is equipped with an omnidirectional (and/or holonomic) mecanum drive with wheels 312. Due to its sensor setup for obstacle avoidance, the exemplary robot 300 of Figs. 3A and 3B has a preferred movement direction of facing forwards 302 while driving. The purpose of the robot 300 is to transport rectangular goods, e.g., transport boxes 314 on a carriage.

In Fig. 3A, the robot 300 is illustrated in a perspective view with a stack of transport boxes 314. Fig. 3B schematically illustrates the footprint (and/or projection onto the 2D floor plan, and/or 2D map of the plane) of the robot 300.

The robot 300 comprises a front 302, back 306 and sides 304. A reference frame (e.g., of, and/or aligned with the footprint) is provided by an x-direction at reference sign 308 and a y-direction at reference sign 310.

In Fig. 3B, as an illustrative example, the lateral (and/or transversal extension of the robot 300 is 0.37m, and the longitudinal extension of the robot 300 is 0.89m.

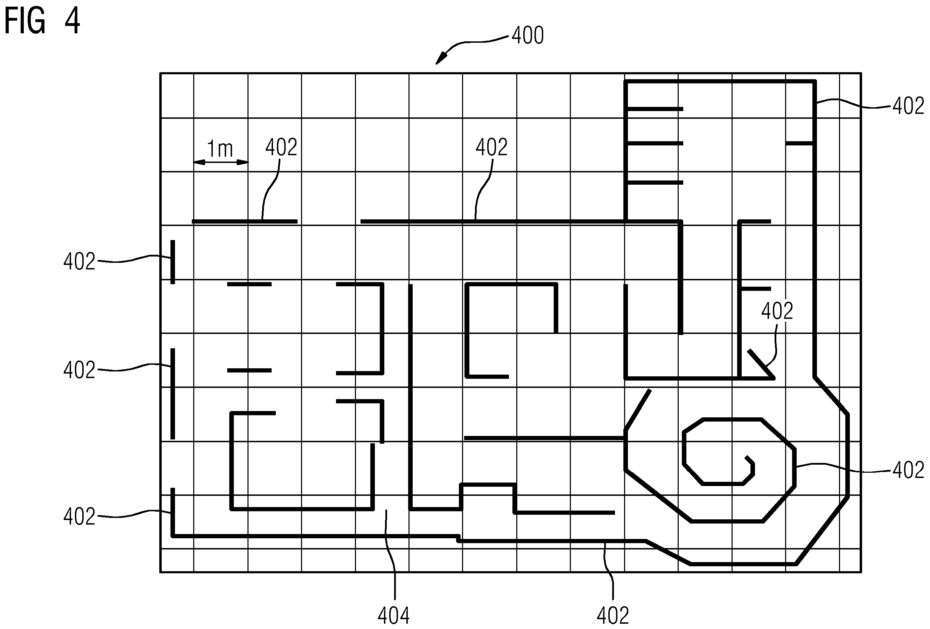

Fig. 4 exemplarily illustrates a 2D map of a plane of an environment 400 with obstacles 402 in the form of walls. Empty spaces, corridors, and/or hallways 404 are provided between the obstacles 402. The environment 400 may, e.g., correspond to (and/or may comprise) a lab space, and/or a factory floor.

The exemplary environment 400 of Fig. 4, that the robot 300 may be placed in, comprises several critical sections. The width of hallways is set to a value only marginally bigger than the width of the exemplary robot 300 itself, creating areas where changes in the orientation (also denoted as inplace rotations) of the robot 300 are not possible without causing a collision.

Fig. 4 shows the exemplary 2D map created using a simulated 2D-lidar and a SLAM algorithm ([5], [6]). The exemplary 2D map has a resolution of 2.5cm and counts 549×412 (x-y) nodes (and/or cells), resulting in a map size of 13.7125m × 10.2875m, and requiring 266.188KB of memory. The underlying grid has a node distance (and/or cell size) of 1m per grid direction (and/or per cell side) and may be used for size and distance comparison.

To illustrate the effectiveness of the inventive technique, a selection of navigation requests (e.g., each comprising a start point 502 and end point 506 with predetermined orientations of the robot) that comprise critical sections has been made and tested with conventional 2D path planning algorithms.

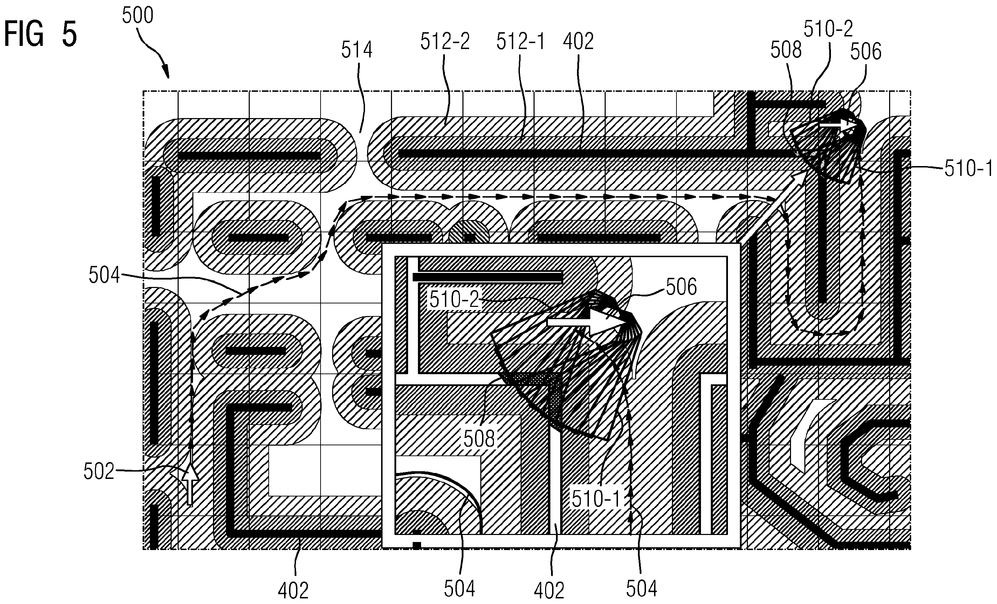

In Figs. 5, 6, 7A and 7B, the start point 502 is connected by the planned path 504 to the end point 506. Sections of collisions with obstacles, in particular walls 402, are shown at reference sign 508 in each figure. The collisions take place when the robot follows the conventionally planned 2D paths.

The start orientation, which faces forward in each of the exemplary illustrations of Figs. 5, 6, 7A and 7B, and the end orientation (also denoted as target orientation) are displayed by the arrow directions at reference sign 502 and 506, respectively.

The orientation along the path is generically facing forwards (towards the next pose, and/or the consecutive position and orientation), except when close to the start pose and/or end pose (also denoted as goal pose), where the robot is allowed to move more freely to reach the next desired orientation (and/or rotation) more quickly.

Fig. 5 shows a long-distance example that causes a collision at reference sign 508 right before delivering the goods into the exemplary loading bay at the end position 506. At reference signs 510-1 and 510-2 exemplarily, footprints of the robot (e.g., as shown in Fig. 3B) are shown with different orientations leading to the collision 508 when transitioning from the first orientation 510-1 to the second orientation 510-2.

In Fig. 5, surrounding the obstacles (e.g., walls) 402, differently shaded areas 512-1 and 512-2 denote nodes (and/or cells) with decreasing cost values, with the unshaded area at reference sign 514 denoting nodes (and/or cells) with vanishing cost value.

While the problem of the collision 508 might be resolved by altering the robot's orientation by just a bit in the example of Fig. 5, it shows how close but yet so far the simple collision-free planning solution can be.

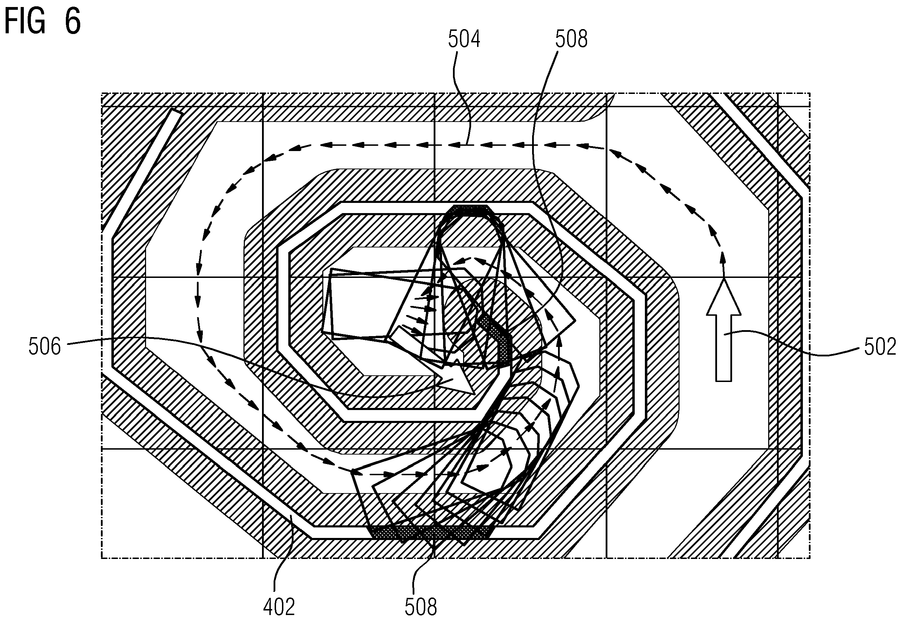

Fig. 6 illustrates a (e.g., more difficult) example, in which the robot should reach the center of a tight spiral, which is difficult but possible. Solving the problem of determining a collision-free path conventionally requires the robot to move closer to the obstacles (in particular walls) 402, which an inflation layer prevents.

The inflation layer may comprise a tool that artificially extends obstacles in a 2D map by the circumscribing radius of a robot instead of actually projecting the robot's footprint into the map. For round robots (also denoted as circular robots), where the minimum distance to obstacles is constant (and/or corresponds to the robot's radius R), the inflation layer reduces the computational effort for path planning significantly, as now only nodes (and/or cells) that are further away than the radius R from an obstacle are valid.

The 2D map of Fig. 4 may be denoted as original map, and the schematic presentation in Fig. 5 may be denoted as inflated map and/or 2D costmap. E.g., the darker shaded areas at reference sign 512-1 may mark "inflated lethal" nodes (and/or "inflated lethal" cells), e.g., meaning the distance to obstacles (e.g., walls 402) is less than a round robot's radius R, and therefore it is sure that there would be a collision. Alternatively or in addition, the lighter shaded areas at reference sign 512-2 may mark decreasing cost values (and/or cell costs), e.g., that indicate that obstacles (e.g., walls 402) are close. The decreased cost values close to obstacles may help to, e.g., keep more distance (e.g., according to a safety area, and/or protective field) to walls around corners.

For the mobile non-circular robot according to the inventive technique, the darker shaded area at reference sign 512-1 in Fig. 5 may indicate a node (and/or cell), for which a collision with a nearby obstacle (e.g., wall 402) occurs for any orientation of the robot. Alternatively or in addition, the lighter shaded area at reference sign 512-2 in Fig. 5 may indicate a node (and/or cell), for which a collision with the nearby obstacle (e.g., wall 402) only occurs for some orientations of the mobile non-circular robot (e.g., the longitudinal direction of the robot pointing towards the obstacle).

To find a collision-free path, it is necessary to adjust the orientation of the mobile non-circular robot, at least in some sections of the 2D map of Fig. 6, to not always face perfectly forwards.

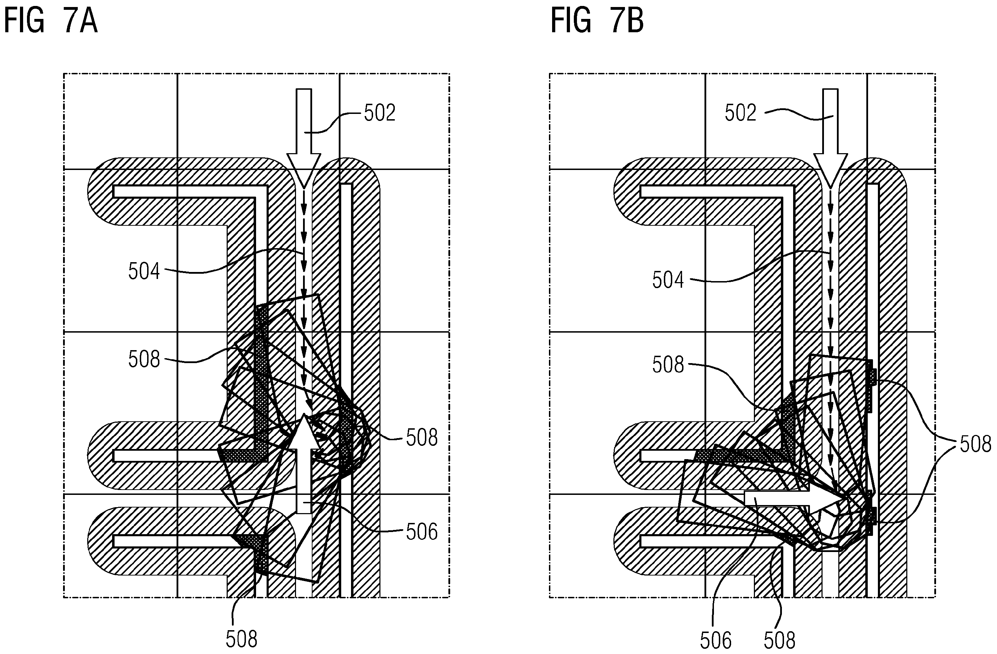

Figs. 7A and 7B provide examples of an initially facing forward mobile non-circular robot, as indicated by the arrow of the start position 502, with two different orientations of the end position, as indicated by the direction of the arrow at reference sign 506. If the robot enters the corridor (also denoted as hallway) facing forward and only attempts to change the orientation at the end position 506, several collisions with obstacles (in particular walls) as indicated at reference signs 508 occur.

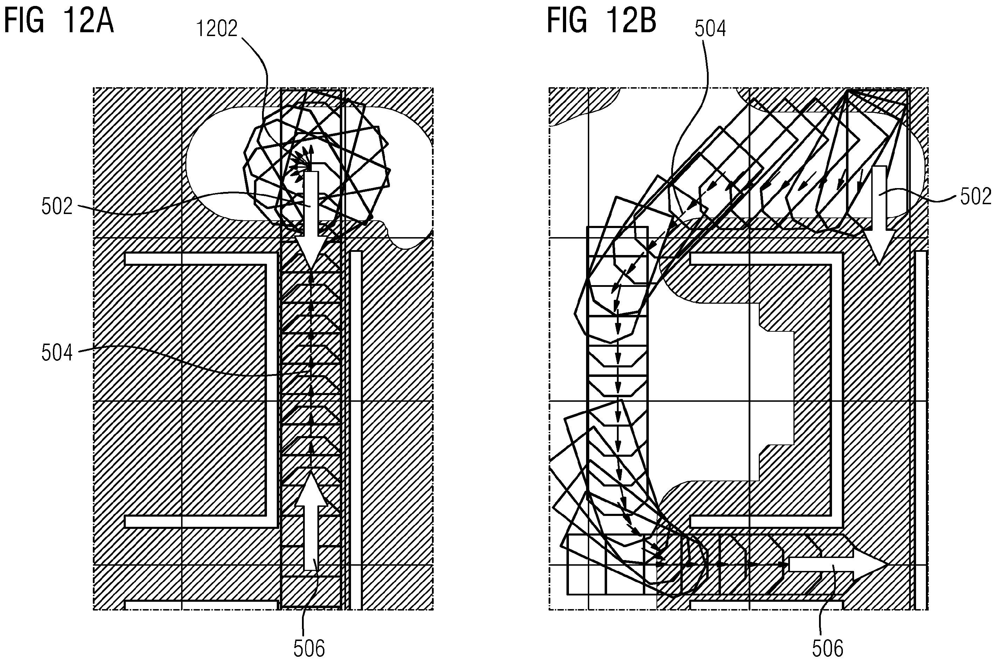

In the case of Fig. 7A, a collision-free path along the same corridor (and/or hallway) exists and is found by the inventive technique, in which the robot first rotates, as indicated at reference sign 1202 in Fig. 12A, and then moves through the corridor (and/or hallway) facing backwards.

By contrast, conventional path planning algorithms are not capable of detecting the collision-free path. In particular, the information that there is no connection between the end (and/or goal) orientation and the positions just before is missing in the conventional 2D costmap. As the inflation layer (IL) of the conventional 2D costmap is (e.g., conventionally) determined (and/or calculated) using the short side of a non-circular robot, the IL only covers a circular robot with the radius of the short side for collision checks. Such a circular robot can traverse the corridor (and/or hallway), as it can rotate there, but a non-circular (and/or long) robot cannot traverse the corridor (and/or hallway), as the positions of the non-circular (and/or long) robot between the two orientations (e.g., 0 degrees and 90 degrees) would cause collisions with the walls.

The information on the longitudinal direction of the mobile non-circular robot is missing in the conventional inflated map (and/or 2D costmap), as it does not account for the robot's orientation, and therefore does not indicate (and/or parameterize, and/or know) that there would be collisions.

The conventional search algorithms therefore consider moving through the nodes (and/or cells) of the IL as valid and plan a path that cannot be executed without collisions.

In contrast, the inventive technique produces no (e.g., direct) connection between the two orientations, as they would cause collisions. When path planning (and/or graph-searching) the 3D costmap, there is no direct connection, and therefore no path is planned through that passage.

In the case of Fig. 7B, the exists no collision-free path using the displayed straight corridor (and/or hallway, and/or passage), even when rotating before entering the corridor (and/or hallway, and/or passage), due to the tightness (and/or narrowness) of the straight corridor (and/or hallway, and/or passage) and the T-shaped junction with a second corridor (and/or hallway, and/or passage). With the choice of start pose 502 and end pose 506 of Fig. 7B, the robot has to take a completely different route, entering the second corridor (and/or hallway, and/or passage) from the left rather than from above, as shown in Fig. 12B, where the collision-free path has been found by the inventive technique.

All implementations of the inventive technique can be made in C++ 17 utilizing open-source libraries from the ROS navigation stack and using the ROS visualization (RVIZ) package for visualization.

The programs implementing the method 100 have been successfully tested on a system with an AMD Ryzen 5 3600 processor and 16GB RAM that runs Linux Ubuntu 20.04 and ROS Noetic. The developed planner (e.g., comprising the consecutive positions selecting module 208, the processor 218, and/or embodied by the computing device 200) has in an embodiment been implemented as a global planner plugin for the ROS navigation stack.

So far, all methods, in particular including the generating (and/or creating) of the 3D costmap as well as the HunGreedy (e.g., search) algorithm, have been implemented as single-threaded. Extending these implementations, e.g., the generating (and/or the creation) of the 3D costmap may be done by multiple threads at once (and/or by parallel programming).

Using multiple threads can reduce the calculation time by a factor N, where N is the number of threads created. E.g., on a quad-core processor, using four threads can reduce the times provided in Table I by a factor of four, making it much more suitable (and/or viable) for real-time applications. Using multiple threads can potentially even eliminate the need to generate in advance (and/or preprocess) the 3D costmap.

Pointers, if used, may be smart pointers (e.g., std::shared ptr) to eliminate the workload of manual memory management.

To allow the use of conventional graph search algorithms (also denoted as path planning algorithm) that proved to be effective in reducing path planning time for navigation requests, the 2D map of the plane (also denoted as 2D costmap) composed of nodes (also denoted as x-y cells) must be extended, according to the inventive technique, to include information about the robot's orientation and the resulting cost values (also denoted as cell costs).

A data structure "ExtendedCostmap" was created and filled with information of the inventive technique. The data structure "ExtendedCostmap" comprises the following main elements:
- char[][] costmap _2d: The base data for the 3D costmap;
- double cell size: The size of each node area (also denoted as x-y cell). In the example of Fig. 4, the size (and/or the distance between neighboring nodes) is 2.5cm;
- int[][][] costmap _3d: The extended costmap storing yaw, x and y cost values (also denoted as yaw, x and y cell costs, and/or cost values associated with yaw, and/or orientation);
- double angular _resolution: How far one step in the yaw-direction can rotate the robot; and
- pair<x,y>[][] angled _footprints: A set of relative indices that resemble inlier points of an oriented footprint.

An inlier point may comprise a node lying within the oriented footprint (and/or within the oriented convex hull) of the robot.

Determining inlier points of an oriented footprint is generally a time-consuming process that scales with map precision and footprint size and complexity. With the 2D grid as base data, the inlier points for a specific orientation match for all (e.g., x-y) positions and can therefore be determined offline in advance (also denoted as pre-computed), e.g., instead of recalculating them for each node (and/or cell). Algorithm 1 describes the process of determining the inlier points in pseudocode.

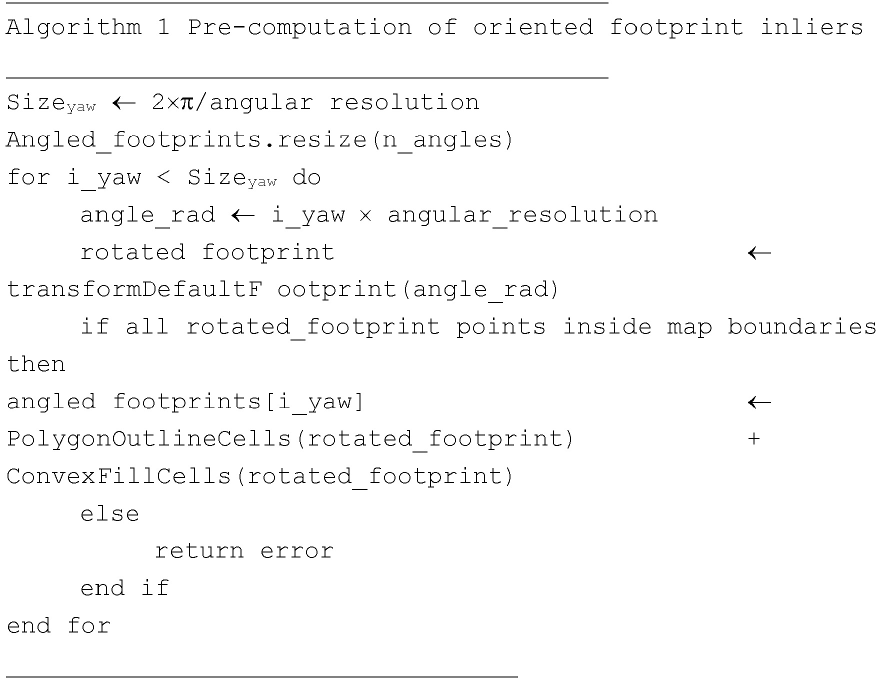

According to Algorithm 1, first the size of the array storing the footprints is set using the desired angular resolution. Then a pose is created for each resulting angle, and the convex (e.g., hull) filling nodes (and/or cells) as well as the nodes, (and/or cells) that the outline of the footprint of the robot occupies, are collected and stored in the array. If this gathering fails due to some points being outside of the (e.g., 2D) map, the process has to be aborted, as in this case only incomplete collision checks can be performed during the creation of the 3D costmap.

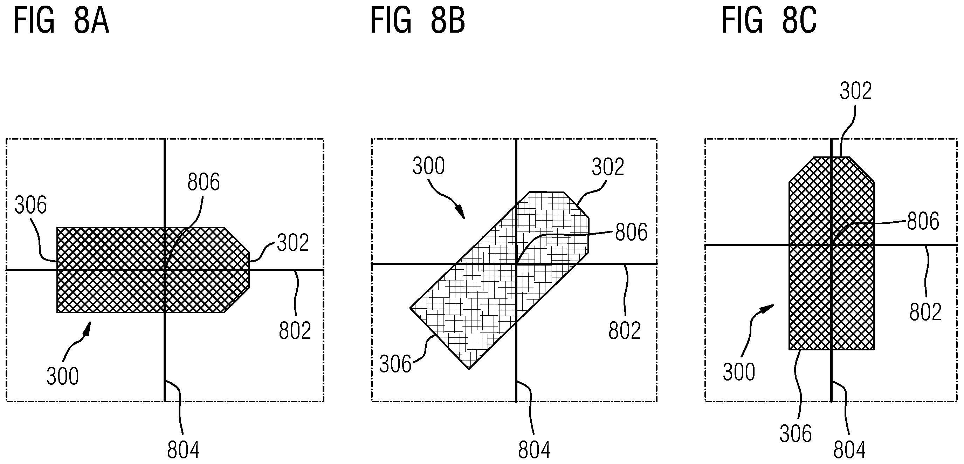

Figs. 8A, 8B and 8C shows examples of oriented footprints, with front 302 and rear (also denoted as back) 306 of the robot 300 and the matching inlier points. The used footprint corresponds to the footprint of the robot 300 with freight as shown in Fig. 3A and 3B with a footprint padding of 3.5cm that enforces spacing (e.g., corresponding to the safety areas, and/or protective fields) between obstacles (e.g., walls 402) and the robot. Without padding, the collision checks later would allow zero distance between walls 402 and the robot chassis, which could potentially result in collisions (e.g., due to the, in particular loaded, robot's inertia).

In Figs. 8A, 8B and 8C, at reference signs 802 and 804 a first and second (e.g., mutually orthogonal) direction of the grid is shown. At reference sign 806, the rotation axis (e.g., located at the center of mass) of the robot 300 is indicated. By the first and second directions 802; 804 crossing at the point at reference sign 806, also a node 806 (e.g., representing a cell) of the 2D map (and/or grid) is schematically depicted. In Figs. 8B and 8C, the orientation of the robot 300 is rotated by 45 degrees (and/or by π/4) and by 90 degrees and/or by π/2), respectively, relative to the orientation of the robot 300 in Fig. 8A.

The cost value (and/or cell cost) of each node (and/or x-y yaw-cell), in an exemplary embodiment, is calculated by adding the 2D cost values (and/or cell costs) of the inlier points of the footprint on the matching pose. As the relative positions of the inlier points of the oriented (and/or angled) footprint have already been previously determined (also denoted as pre-computed), the (e.g., x-y) positions of each inlier point only have to be shifted according to the relative shift from the previously determined position (also denoted as precomputation-position). Once encountering a node (and/or cell) that has the value of an obstacle in 2D (e.g., corresponding to "blocked", and/or "lethal"), the 3D node (and/or cell) may also be marked as blocked, and/or lethal. As the process of determining the 3D cost value has to be performed for the (e.g., complete) 3D costmap (in particular for every position, and/or node), a generation function is performed that iterates through all (e.g., three) dimensions (in particular comprising yaw, x and y) and tries to determine (e.g., compute) the cost value, if possible (e.g., only for positions lying sufficiently away from an outer boundary of the environment, outside of which the 2D map of the plane is unknown).

To reduce memory (in particular re-)allocation during that process (e.g., of generating the 3D costmap), in an embodiment, the costmap is initialized with the expected size and a cost value that resembles an UNKNOWN (e.g., node, and/or cell) cost value, which is treated as non-traversable during path planning. With the outermost dimension being the angular dimension, it is also possible to relax the determination (e.g., calculation) problem for unavailable footprints by skipping the angle and therefore leaving all nodes (and/or) cells (e.g., and therefore all poses with that orientation) UNKNOWN and therefore non-traversable. By implementing this option, the algorithm effectively skips Size_{X} × Size_{Y} nodes (and/or cells), e.g., corresponding to the size of the 2D map (and/or the whole 2D costmap), and therefore reduces calculation time.

Algorithm 2 describes the process of determining the (e.g., complete) 3D costmap in pseudocode.

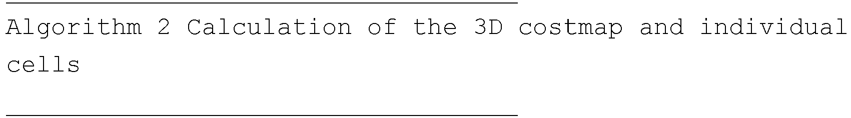

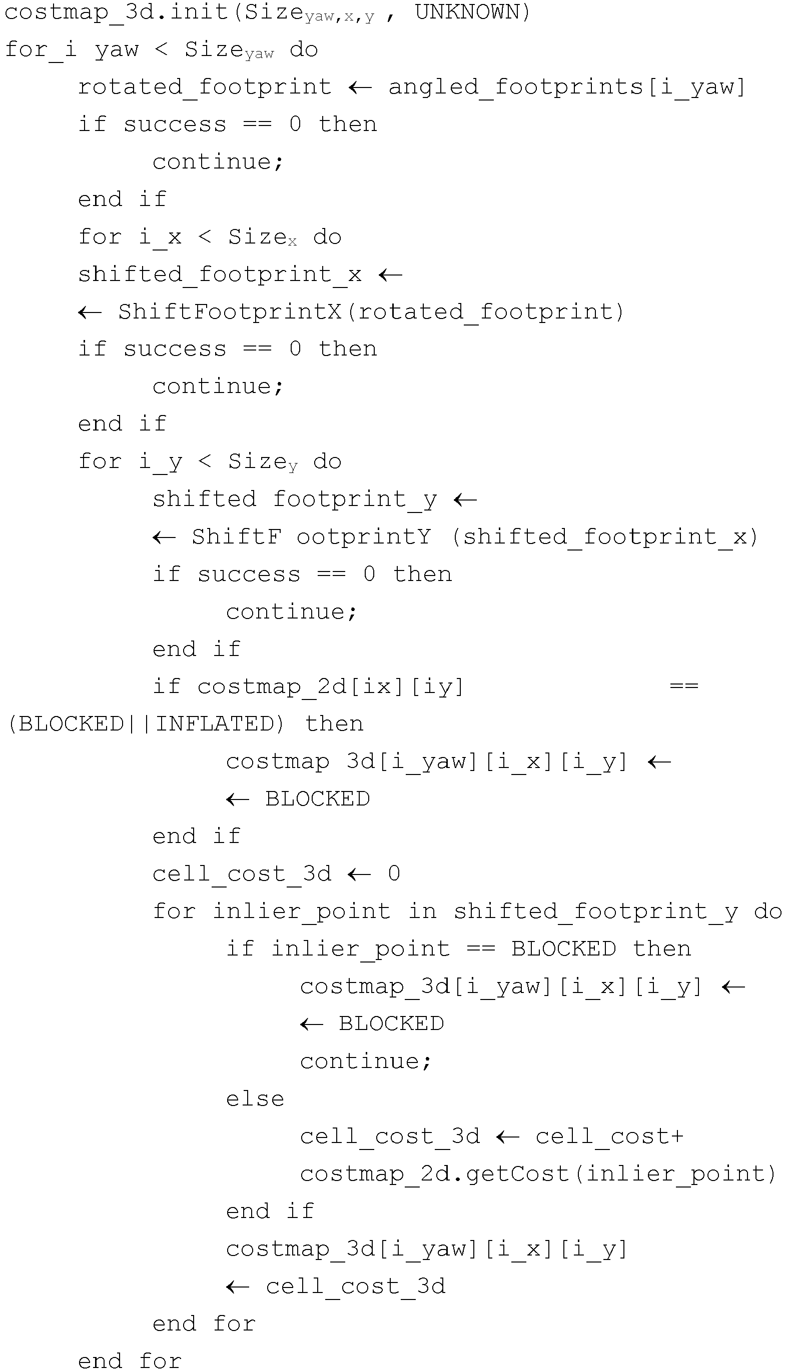

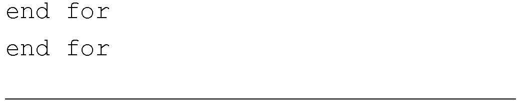

If the oriented footprint is available, the algorithm can proceed with shifting the footprint so that its center (e.g., of mass) matches the coordinates of each (e.g., x-y) position requested. If the shift encounters at least one inlier point being moved outside of the map boundaries of the 2D map, the position is considered as invalid, and therefore all calculations may be skipped (e.g., nodes, and/or cells, remain UNKNOWN), which saves Size_{Y} computations for (e.g., x) positions along a first grid direction (e.g., at reference sign 802 in Figs. 8A, 8B and 8C) close to the map boundaries. For (e.g., y) positions along a second grid direction (e.g., at reference sign 804 in Figs. 8A, 8B and 8C), only a single calculation may be skipped due to the implementation.

With the cost values for all (e.g., x-y) nodes (and/or cells) determined (e.g., calculated) and stored (e.g., in a 3D array), where yaw is used as the first dimension, it is possible to access a 3D costmap for each orientation.

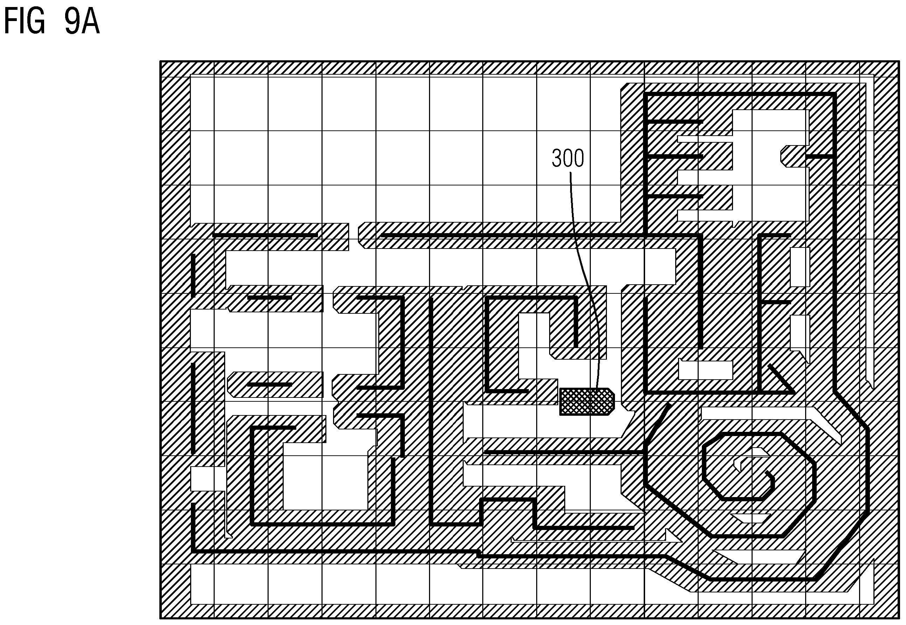

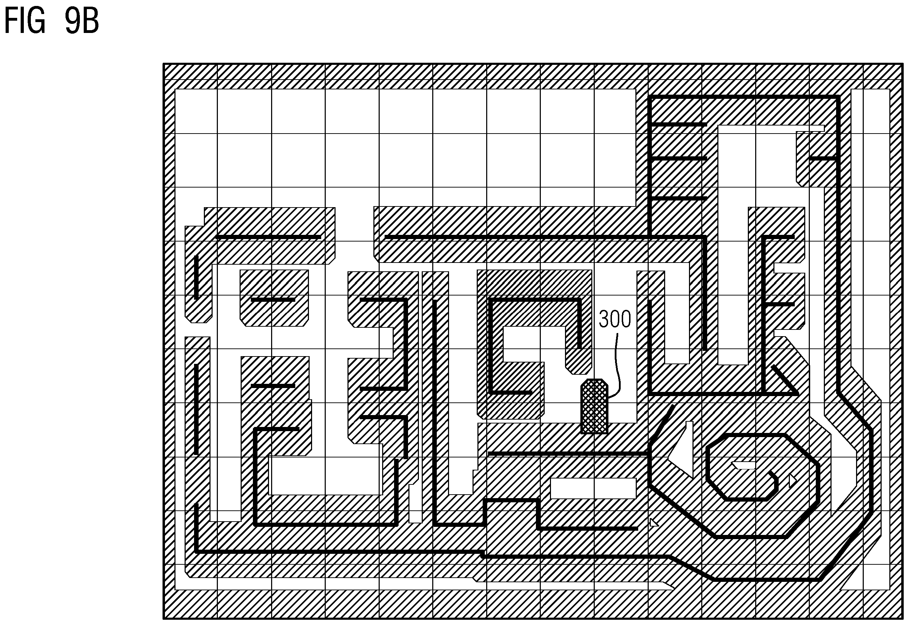

Figs. 9A and 9B exemplarily illustrate oriented 3D costmaps (e.g., that result from the determinations, and/or calculations, as described herein). White areas mark nodes (and/or cells) that are traversable (e.g., corresponding to a vanishing cost value) with the given orientation of the robot 300. Dark nodes (and/or cells) indicate (e.g., potential) collisions, and/or non-traversable nodes (and/or cells).

The footprint at reference sign 300 in each of the Figs. 9A and 9B displays the orientation of the robot 300 for the displayed (e.g., 3D) costmap.

In Fig. 9A, the oriented 3D costmap is schematically illustrated for yaw=0.

In Fig. 9B, the oriented 3D costmap is schematically illustrated for yaw=90 degrees (and/or π/2).

Areas close to (and/or around) the outer boundaries of the (e.g., 2D) map are non-traversable as the footprint may not be shifted completely, which makes the nodes (and/or cells) close to the boundary uncertain (and/or unknown).

As visible from the comparison of Figs. 9A and 9B, the width of the white areas (and/or corridors), corresponding to the cost values of the positions (and/or nodes) depends on the orientation of the non-circular robot 300.

Table I shows some examples for the resulting number of nodes (and/or cells), the calculation time and the memory requirements in relation to the desired angular precision (which may also be denoted as angular resolution). The parameters of the underlying map correspond to those described in connection with the embodiment of Figs. 3A, 3B and 4. As a large part of the map usually does not change too much between power cycles of a robot, it makes sense to save the computed map (e.g., to a hard disk, for example of the computing device 200) and load it at startup (e.g., of the computing device 200, and/or of the method 200) to avoid repeating the computational effort (e.g., of generating the 3D costmap according to the step S102).

| TABLE I: CALCULATION TIMES AND MEMORY REQUIREMENTS | | | | |
|---|---|---|---|---|
| Precision | Steps/2π | n Cells | Calc Time | Memory |
| 1 deg/step | 360 | 8.14×10⁷ | 83.8 s | 325.711 MB |
| 2 deg/step | 180 | 4.07x107 | 41.9 s | 166.855 MB |
| 3 deg/step | 120 | 2.71×10⁷ | 30.0 s | 108.570 MB |
| 4 deg/step | 90 | 2.03×10⁷ | 20.8 s | 81.428 MB |
| 8 deg/step | 45 | 1.02×10⁷ | 10.55 s | 40.713 MB |

With the (e.g., extended) 3D costmap being generated in advance (also denoted as pre-computed), the path planning is limited to a static environment without accounting for dynamic obstacles. To allow for changes after the generating (and/or pre-computation) of the 3D costmap, a section-wise updating algorithm may be integrated that searches for changes in the 2D grid and then updates all surrounding 3D nodes (and/or cells) within a predetermined radius, which may correspond to the circumscribing distance of the footprint.

The examples in Table I clearly show that the angular precision of the 3D costmap should be set to the least possible value to save (e.g., computing, and/or time) resources. To ensure that the collision checks are still as precise as necessary, [3] suggests using the travel distance of the furthest inlier point from the rotational center (and/or rotation axis) of the robot.

As the furthest inlier point from the rotational center will travel the furthest during rotations, it sets the minimum precision for no inlier point to travel more than one node (and/or cell) for each rotation step. The distance to the furthest inlier point from the rotational center may also be known as the circumscribing radius of the robot's footprint, and/or may be obtained using the planar (e.g., x and y) values of the furthest footprint point. For the example footprint of the robot 300 of Figs. 3A and 3B, these values are: ${P}_{x} = 0.48 m ; {P}_{y} = 0.185 m ;$ (1) $r = \sqrt{{\left(0.48m\right)}^{2} + {\left(0.185m\right)}^{2}} = 0 . 524 m .$ (2)

The circumference of the resulting circle is $c = 2 π \times 0.524 m = 3.29 m .$ (3)

Using the 3D costmap resolution of 2.5cm = 0.025m, it may be determined (and/or calculated) how many steps are required in a full 360 degree (and/or 2π) rotation to achieve a node (and/or cell)-to-angular-step-ratio of equal or less than one: ${n}_{steps} = 3.29 m / 0.025 m = 131.6 .$ (4)

The value nₛₜₑₚₛ can be used to obtain an approximation of the required precision per step that ensures that no part of the robot travels further than one node (and/or cell) per step.

Skipping a node (and/or cell) may potentially produce paths (and/or connections) between nodes (and/or cells) that are not collision-free. Using only integers as steps, as the step width cannot be less than one for index progress (e.g., see Algorithm 2), 132 steps are used in the embodiment: ${P}_{ps} = 360 / 132 = 2.73 deg / step = 0.0476 rad / step .$ (5)

Eq. (1) to (5) may be merged into a single general equation: ${P}_{ps , rad} = \frac{2 π \times {P}_{costmap}}{2 π \times \sqrt{{P}_{x}^{2} + {P}_{y}^{2}}} = \frac{{P}_{costmap}}{r} .$ (6)

The basic (and/or baseline) algorithm structure in the exemplary embodiments is similar to conventional graph search algorithms, e.g., A* or D*-Lite, also utilizing the concepts of a priority queue, a closed list, and a cost function to calculate the cost value to reach a node (and/or cell), including some form of heuristics to speed up the search process. The inventive technique (e.g., comprising the algorithm), however, differs in important implementation details.

The data structure used to represent each node (also denoted as x-y-yaw-cell), e.g., in a graph, is a custom class that may be extended according to the needs for cost calculations. Its main components are:
- Coordinates: The x, y and yaw index in the 3D costmap_3d data structure;
- Parent: A pointer to the previous (e.g., graph) node that is used to backtrack the path;
- Direct Goal Vector: A direct vector connecting the (e.g., graph) node and the end node (also: goal node);
- Last Movement: The latest movement (e.g., a single step) that was made to reach the node (and/or cell);
- Cost: The total cost to reach the node;
- Detailed Cost: Multiple cost values that are used to track individual cost components and their contribution to the total cost more precisely.

The cost in the above list may correspond to the cumulative cost value in the step S108 of iteratively selecting consecutive positions.

Algorithm 3 describes the path planning, in particular the step S108 of iteratively selecting consecutive positions, (also denoted as graph search algorithm) of an embodiment in pseudocode.

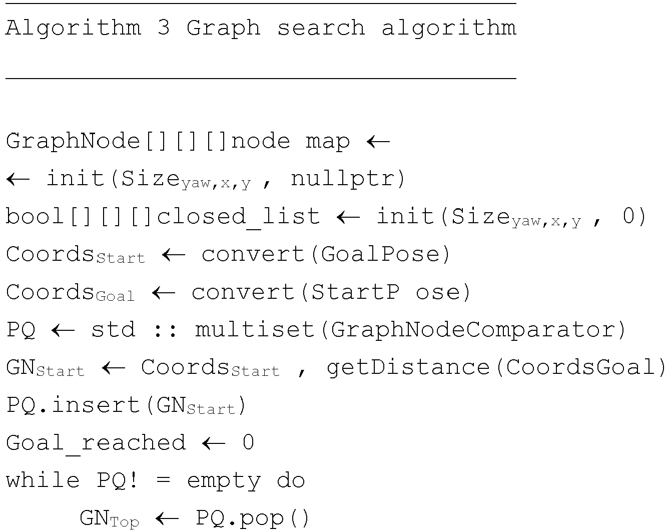

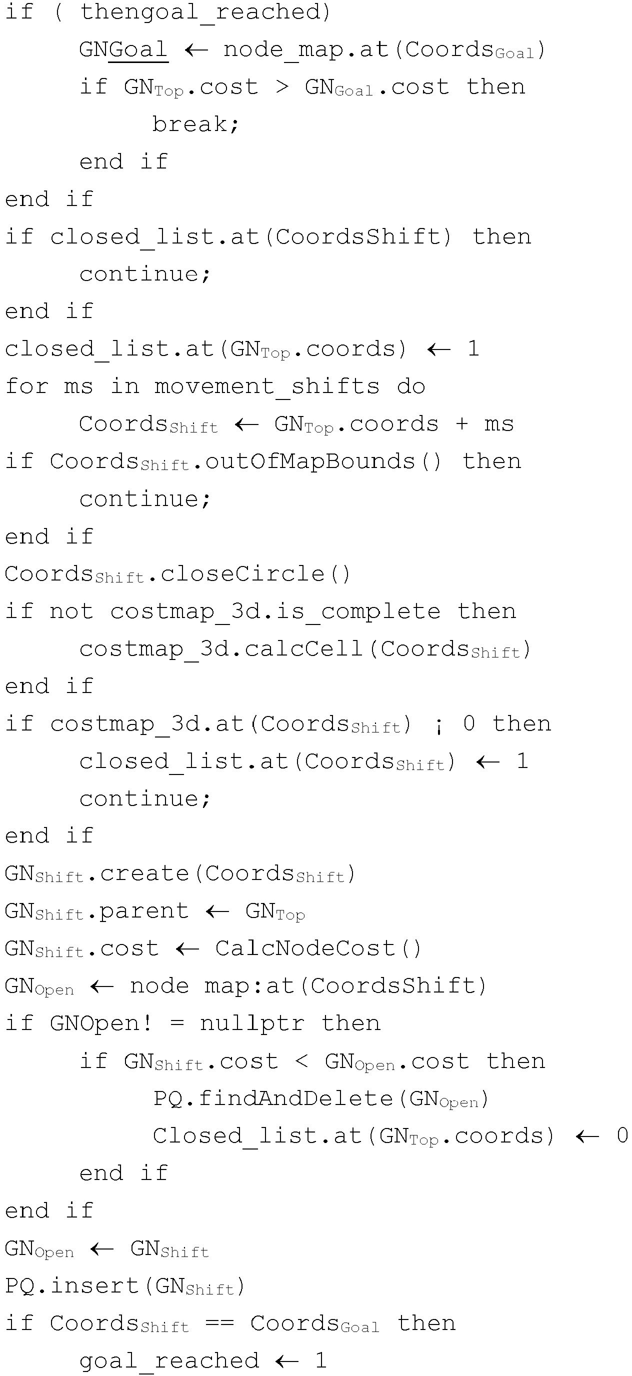

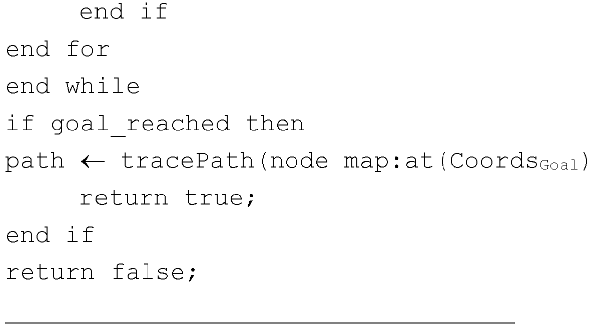

Implementation details of Algorithm 3 that differentiate it from conventional approaches of path planning comprise:
- Switching Start and End (and/or Goal) Node: Similar to D*-Lite, the algorithm searches from end (and/or goal) to start to allow for faster reactions to dynamic elements;
- Priority Queue (PQ): The data structure used for the priority queue is a std::multiset with a custom comparator for the node cost. This allows for easy cost updates during path planning;
- Cell Exploration: A movement shift vector may be given that comprises all possible movements for the used drive kinematics. E.g., for a holonomic robot advancing one step per dimension in both directions, the vector contains 26 different possible movements (3³-1 as (0,0,0), and/or remaining in the same pose, is not included). The algorithm may be adjusted for non-holonomic robots (e.g., with a differential steering geometry) by using an adjusted movement shift vector;
- Open and Closed List: While the closed list is implemented as a conventional 3D Boolean array, there is no such open list in this embodiment, as tracking of updates is difficult using a binary value. Alternatively or in addition, the mechanism of the open list is "hidden" in the (e.g., node, and/or 3D) map;
- Node Map: A 3D array matching the 3D costmap size is initialized with null-pointers to (e.g., graph) nodes (e.g., along the planned path). Additionally to the parent-field of a (e.g., graph) node, pointers to explored nodes are saved, which allows for direct access and easy comparison during cost updates using the node coordinates when re-visiting explored nodes;
- Nested Cost Updates: With the open list integrated into the node map, it is possible to revisit previously explored (and/or closed) nodes and to update the cost to reach the node if a new, in particular cheaper (and/or having a lower cumulative cost value), path is found. Due to the PQ offering search functions for specific values, the key value of such a node may be modified, potentially affecting the order of the PQ. As this also affects nodes that are children of updated nodes, their closed state is reset, which means they will be fully expanded (e.g., the 3D costmap will be locally regenerated) when popping them from the PQ to update the children as well.
- Unexplored Map: It is possible to compute the cost values of the 3D costmap _3d nodes (and/or cells) while exploring the path (and/or graph). However, as this includes the computational effort of cost calculations into the path (and/or graph) search, the time to plan a path is increased when using the unexplored map.

An aspect, that may affect the behavior of the algorithm the most, is the calculation and composition of the cost value per node (and/or node cost). The approach utilizes various types of cost sources (e.g., efficiency, proximity to obstacles, and/or stress reduction) that are fused using weights to reward specific algorithm behaviours: ${ReachCost}_{x , y , yaw} = Σ {Cost}_{i} \times {Weight}_{i} .$ (7)

If one intends to dismiss one or more of the available factors, the corresponding weights for the cost type may be set to zero **(e.g.,** to disable the cost type).

The conventional A* implementation uses two types of cost: The cost for traversing from one node (and/or cell) to another (including the cost value of the node, and/or cell cost), and a heuristic function towards the end position (and/or goal). The conventional A* algorithm does not account for other factors measuring the quality of a path, which are therefore not considered **(e.g.,** not at all) during path planning.

In order to include factors measuring the quality of the path into planning, the equations for the corresponding factors must be formulated. With the cost value of a parent node usually being included in the cost of its child node, the values of the nodes (and/or cells) rapidly increase with the number of nodes (and/or cells) traversed. Therefore, the cost equations preferably aim to reduce the effect of previous nodes, if possible, in order to represent their true potential more accurately.

To allow the inventive technique (e.g., comprising the algorithm, the method 100, the computing device 200, and/or the system comprising the computing device 200 and the mobile non-circular robot) to include a proximity to obstacles in path planning (also denoted as path calculations), the cumulative cost value (also denoted as accumulated cell costs) of all inlier points may be normalized by dividing the cost value by the amount of footprint points, thereby removing the effect of the footprint size: ${Cost}_{C} = {CellCost}_{x , y , yaw} / {n}_{inliers} .$ (8)

Conventional approaches use fixed cost to traverse from one node (and/or cell) to another and process the progress towards the end position (and/or goal) in another step. The fixed cost and separate processing of the progress towards the end position conventionally causes a lot of nodes (and/or cells) to get fully explored that are not actually promising, just because they are closer to the start position and therefore have not accumulated as much cumulative cost (also denoted as total cost). With the number of possible explorations due to the movement model, the conventional approaches result in time consuming and inefficient calculations.

The inventive technique merges both factors, which results in "free" movements towards the end position (and/or goal). The inventive technique develops the cost value per node (and/or node cost), and/or focuses on very greedy searches for path planning towards the end position (and/or goal). To determine (e.g., calculate) the efficiency of a movement, the length of the movement shift and the change in length of the direct goal vector are added according to an embodiment. If the child node is closer to the end position (and/or goal), the right term becomes negative, therefore subtracting the progress towards the end position (and/or goal) from the movement shift: $\begin{matrix}{Cost}_{E} = len \left(MS\right) + Δlen \left(DGV\right) \\ = len \left(MS\right) + \left(len\left({DGV}_{Child}\right)-len\left({DGV}_{Parent}\right)\right) .\end{matrix}$ (9)

For movement shifts that move directly towards the end position (and/or goal), the whole term becomes zero, as the length of the shift and the change of length towards the end position (and/or goal) match exactly. For shifts that only partly move towards the end position (and/or goal), the cost to move in the other directions still appears in the total result of the term. Shifts moving away from the end position (and/or goal), according to an embodiment, are penalized with doubled traverse cost, as such movements are the least promising.

It is important to note that, due to the nature of the term with len(MS) in Eq. (9) always being greater than, or equal to, Δlen(DGV ), the cost Cost_{E} can never become negative. Alternatively or in addition, the basic requirement for non-negative edge costs for A* or D* searches are satisfied.

Most robots, including the exemplary robot 300 of Figs. 3A and 3B, have a preferred direction of movement. The heading while moving may be rated by converting the movement shift from an index unit to a movement vector. The (e.g., x and y) values (e.g., along a first and second direction on the plane, and/or on the 2D grid) of the shift may be multiplied by sine factors, and/or cosine factors of the orientation of the parent node (and/or cell). By using the absolute value of the vector, it is guaranteed that the resulting cost is always non-negative: $yaw = {Coords}_{Parent , yaw} \times angular _ precision ;$ ${v}_{x} = \left|cos \left(yaw\right)\times ms.x+sin \left(yaw\right)\times ms.y\right| ;$ ${v}_{y} = \left|sin \left(yaw\right)\times ms.x+cos \left(yaw\right)\times ms.y\right| .$ (10)

To reward the preferred direction, weights targeted towards each individual dimension may be applied to the result of Eq. (10): ${Cost}_{H} = {v}_{x} \times {w}_{x} + {v}_{y} \times {w}_{y} + yaw \times {w}_{yaw} .$ (11)

As Eqs. (9) and (10) do not differentiate between positive and negative values, situational factors may be applied depending on the actual direction (e.g., w_{x,pos}).

If a robot (e.g., the robot 300 of Figs. 3A and 3B) should exactly follow the planned path (also denoted as produced path), a crucial aspect for path planning (and/or trajectory calculations), including the speed (also denoted as execution speed) for the robot executing the planned path, is to minimize the change of movement directions, as the changes of movement directions often require the speed (also denoted as velocity) to come down (e.g., close) to zero for that dimension (and/or change in direction). Alternatively or in addition, the maximum speed (and/or velocity) on the section (e.g., of the planned path) is limited, in particular beforehand, e.g., due to the robot's (negative, and/or positive) acceleration limits.

With the value of the last movement shift, the cost of change, and/or stress, are determined (and/or calculated) for all three dimensions, e.g., for x: ${s}_{x} = \left|{LMS}_{Parent , x}-{MS}_{x}\right| .$ (12)

Costs along all three dimensions are then accumulated to obtain the total weight, and/or the total cost: ${Cost}_{s} = {s}_{x} + {s}_{y} + {s}_{yaw} .$ (13)

In an exemplary embodiment, the algorithm was used with parameter values w_{c} = 4; wₑ = 4; wₘₛ =1; w_{x,pos} = 1; w_{x,neg} = 4; w_{y} = 4; w_{yaw} = 4; wₛ = 1. The parameter values were empirically determined by manually evaluating the planned paths (and/or produced paths).

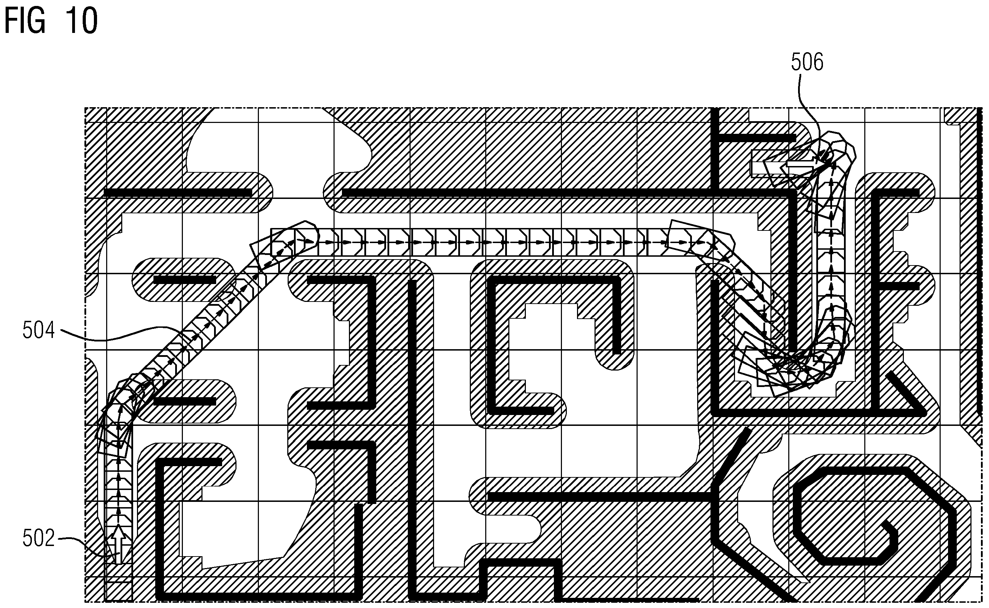

Figs. 10, 11, 12A and 12B each show the planned path (and/or produced path) according to the inventive technique at reference sign 504, as well as the projected footprints for each pose on the path (e.g., around the path 504), and the exploration state of the 3D costmap.

The exploration state of the 3D costmap is displayed by counting the visited angles per node (e.g., x-y-cell), where fully explored (in particular traversable) nodes (and/or cells) (e.g., 360 degrees, and/or 2π) appear as white, and non-explored (and/or explored as non-traversable) nodes (and/or cells) are dark.

It is noted that there are a lot of nodes (and/or cells) that may be traversable in Figs. 10, 11, 12A and 12B, which are still marked in dark because they have not been explored in the step S108 of iteratively selecting consecutive positions (and/or by the inventive path planning, and/or path search, algorithm). The existence of unexplored nodes (and/or cells) is favorable (and/or good), as it shows the direction and/or the focus of search (e.g., avoiding veering away from the end position 506), which reduces computational effort if not all nodes (and/or cells) are explored and a (in particular collision-free) path is still found.

Table II shows exemplary details about the planned (and/or produced) paths, runtime requirements and the number of explored nodes according to the inventive technique.

| TABLE II: BENCHMARKING RESULTS | | | |
|---|---|---|---|
| Case | Calc Time | Movements | Nodes Expanded |
| 1 | 34.0 s | 602 | 3.6 × 10⁶ |
| 2 | 0.24 s | 328 | 8.2 × 10⁴ |
| 3 | 0.32 s | 163 | 8.0 × 10⁴ |
| 4 | 8.98 s | 180 | 9.9 × 10⁵ |

Fig. 10 schematically illustrates case 1 from Table II of long distance (e.g., path) planning including an exploration state for the 2D map of Fig. 4. With test case 1 only having had a problematic section at the delivery point, the results shown in Fig. 10 show that, using the inventive technique, there was room for more optimization regarding movements.

The exploration state of the map for the example of Fig. 10 also shows how difficult finding the path actually was, considering how many areas of the map are fully explored (e.g., white). However, it is hard to improve the situation of the exploration state as the algorithm may get stuck in local minima, e.g., for even more maze-like maps.

As the robot is heading straight forwards for most sections, the algorithm proved to produce orientation-optimized paths. The only exception in Fig. 10 is the first (on the left-hand side of Fig. 10) vertical hallway section, where the effort to perform, e.g., multiple (e.g., two or three) successive, 90 degrees (and/or by π/2) rotations is valued higher (and/or more expensive) than traversing more sideways and therefore closer to walls. Alternatively or in addition, one or two successive 90 degrees (and/or by π/2) rotations may be more expensive (and/or may lead to a higher cumulative cost value) than (in particular two) rotations by 45 degrees (and/or π/4), and/or driving sideways.

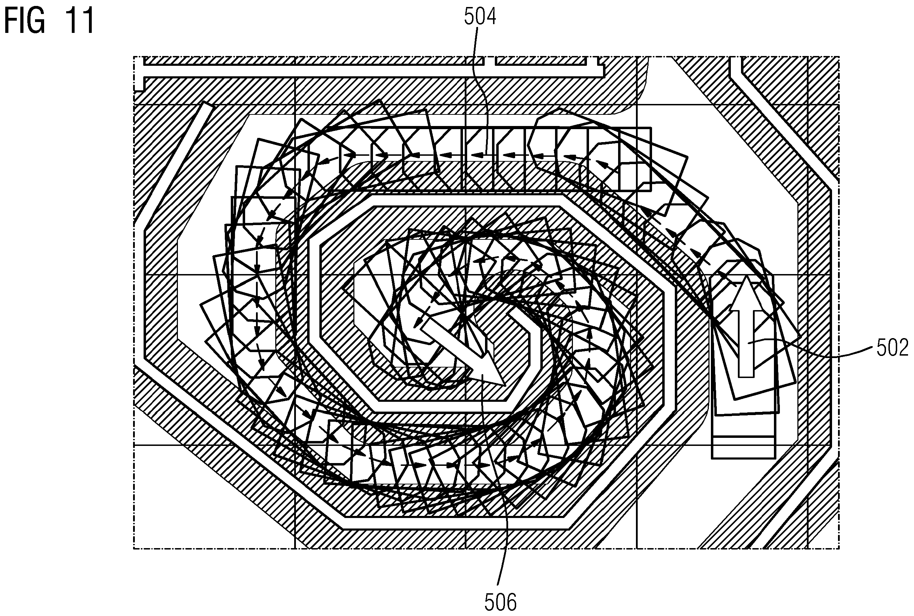

The exploration state and the low calculation time of
test case 2 of Table II, schematically illustrated in Fig. 11, shows how good the algorithm works for more enclosed spaces, such as a spiral. The planned path (and/or produced path) is also collision-free, proving the inventive technique's (and/or algorithm's) ability to plan (and/or produce) collision-free maneuvers in enclosed spaces.

In Fig. 11, illustrating case 2 of Table II, the spiral of Fig. 4 is traversed without collisions.

In Fig. 12A, case 3 of Table II is shown. The robot rotates, as indicated at reference sign 1202, before entering the corridor (and/or hallway) backwards.

The solution of the inventive technique for case 3 looks as expected with the robot turning before entering the narrow corridor (and/or hallway). It is notable that, according to the inventive technique, the non-preferred but necessary backwards movements are among the path solutions.

In Fig. 12B, case 4 of Table II is shown. By the inventive technique, an alternative collision-free path 504 (also denoted as route) is found instead of the non-traversable corridor (and/ hallway).

Case 4 also shows the expected outcome. With the search starting from the end position (and/or goal) 506, the exploration state of case 4 shows no direct connection through the corridor (and/or hallway), as there is no collision-free node connection for the tight corner, which leads to the alternative path (and/or route) around the corridor (and/or hallway).

By the inventive technique, path planning for a non-circular robot in an environment comprising obstacles is provided. A 3D costmap is received. The 3D costmap comprises a 2D map of a plane and a cost value per position on the 2D map, indicative of a cost of positioning the robot with a predetermined orientation in the presence of obstacles in a vicinity of the position. A start position and an end position of the robot are received comprising a start and an end orientation of the robot, respectively. Consecutive positions for a path in planning are iteratively selected from the start position to the end position. A cumulative cost value of the consecutive positions, which comprises a sum of the cost values, is minimized. The cumulative cost value further comprises a stress value, e.g., indicative of a change in a movement direction along the planned path.

The benchmarking results of Table II prove the inventive technique's (e.g., comprising the algorithm, the method 100, the computing device 200, and/or the system comprising the computing device 200 and the mobile non-circular robot) ability to solve advanced navigation problems for the example anyshape (and/or non-circular) footprint and a holonomic drive of the robot 300 of Figs. 3A and 3B.

Due to the exemplary algorithmic implementation, the approach is also applicable for any other shape. In contrast to conventional approaches, the inventive technique proves to be able to produce longer paths through more open spaces, while outperforming the conventional approaches both in map resolution and calculation time. Due to the inventive additional factors for node costs, the definition of a path quality is shifted towards real applications. To reduce calculation time and therefore improve (e.g., online) usability on a real robot, difficult paths may be pre-processed (e.g., the 3D costmap generated in advance) and loaded from a memory (e.g., disk), e.g., of the computing device 200. It is also feasible to identify collisions and/or cluttered sections of the 2D path and solve the collisions and/or cluttered sections more individually (and/or in an isolated manner). Alternatively or in addition, generally having the option to solve (e.g., partial path) problems individually (and/or in an isolated manner) may make the key difference for the usability of a fully autonomous robot in an industrial setting.

Wherever not already described explicitly, individual embodiments, or their individual aspects and features, described in relation to the drawings can be combined or exchanged with one another without limiting or widening the scope of the described invention, whenever such a combination or exchange is meaningful and in the sense of this invention. Advantages which are described with respect to a particular embodiment of present invention or with respect to a particular figure are, wherever applicable, also advantages of other embodiments of the present invention.

### List of Cited Documents

[1] E. Marder-Eppstein, E. Berger, and T. Foote, The Office Marathon: Robust Navigation in an Indoor Office Environment, IEEE International; Conference on Robotics and Automation, 2010
[2] S. Koenig and M. Likhachev, D*Lite, Proceedings of the Eighteenth National Conference on Artificial Intelligence and Fourteenth Conference on Innovative Applications of Artificial Intelligence, 2002
[3] M. Dakulovic, C. Sprunk, L. Spinello, Ivan Petrovic, and and W. Burgard, Efficient Navigation for Anyshape Holonomic Mobile Robotsin Dynamic Environments, IEEE/RSJ International Conference on Intelligent Robots and Systems, 2013
[4] R. Samaniego, J. Lopez, and F. Vazquez, Path Planning for Non-Circular, Non-Holonomic Robots in Highly Cluttered Environments, Sensors, August 2017
[5] G. Grisetti, C. Stachniss, and W. Burgard, Improved Techniques for Grid Mapping with Rao-Blackwellized Particle Filters, IEEE Transactions on Robotics, Volume 23, pages 34-46, 2007
[6] G. Grisetti, C. Stachniss, and W. Burgard, Improving Grid-based SLAM with Rao-Blackwellized Particle Filters by Adaptive Proposals and Selective Resampling, In Proc. of the IEEE International Conference on Robotics and Automation (ICRA), 2005
[7] B. Lau, C. Sprunk, and W. Burgard, Efficient grid-based spatial representations for robot navigation in dynamic environments, Robotics and Autonomous Systems, pages 1116-1130, October 2013

### Reference Signs

- 100: Method
- S102: Step of generating a 3D costmap
- S104: Step of receiving a 3D costmap
- S106: Step of receiving a start position and an end position
- S108: Step of iteratively selecting consecutive positions
- S110: Step of outputting the planned path
- S112: Step of executing the planned path
- 200: Computing Device
- 202: 3D costmap generating module
- 204: 3D costmap receiving interface
- 206: Start and end positions receiving interface
- 208: Consecutive positions selecting module
- 210: Planned path outputting interface
- 212: Planned path executing module
- 214: Memory
- 216: Input-Output Interface
- 218: Processor
- 300: Mobile non-circular robot
- 302: Front of the robot
- 304: Side of the robot
- 306: Back of the robot
- 308: Longitudinal axis of the robot
- 310: Lateral axis of the robot
- 312: Wheel
- 314: Load
- 400: 2D map of plane
- 402: Obstacle, in particular wall
- 404: Free floor space
- 500: Cost map with planned path
- 502: Start position
- 504: Planned path
- 506: End position
- 508: Collision zone
- 510-1;: Orientation of the robot
- 510-2 512-1;: Region around obstacle with non-vanishing cost
- 512-2: value
- 514: Region with vanishing cost value
- 802: 1^{st} grid direction
- 804: 2^{nd} grid direction
- 806: Node
- 1202: Rotation of the robot at one (e.g., the start) position

## Claims

1. Computer implemented method (100) of path planning for a mobile non-circular robot (300) in an environment (400) comprising obstacles (402), comprising the method steps of:
- Receiving (S104) a three-dimensional, 3D, costmap, wherein the 3D costmap comprises a two-dimensional, 2D, map of a plane, in which a mobile non-circular robot (300) is movable, and wherein the 3D costmap further comprises a cost value, for each position on the 2D map, indicative of a cost of a positioning, and/or a movement, of the mobile non-circular robot (300) in the presence of one or more obstacles (402) in a predetermined environment of the position, wherein the positioning and/or movement comprises an orientation of the mobile non-circular robot (300);
- Receiving (S106) a start position (502) and an end position (506) of the mobile non-circular robot (300) on the 3D costmap, wherein the start position (502) comprises a start orientation of the mobile non-circular robot (300), and wherein the end position (506) comprises an end orientation of the mobile non-circular robot (300);
- Iteratively selecting (S108) consecutive positions for a path to be planned, starting at the received (S106) start position (502) and terminating at the received (S106) end position (506), wherein the iteratively selecting (S108) comprises minimizing a cumulative cost value of the consecutive positions, wherein the cumulative cost value comprises a sum of the cost values of the consecutive positions according to the received (S104) 3D costmap, and wherein the cumulative cost value further comprises a stress value, wherein the stress value is indicative of a change in a movement direction along the planned path (504);
- Outputting (S110) the planned path (504) based on the iteratively selected (S108) consecutive positions, **characterized in that** the 3D costmap is based on a convex hull of a footprint of the mobile non-circular robot (300) onto the 2D map of the plane, wherein the 3D costmap is further based on a predetermined safety area around the convex hull.

2. Method (100) according to claim 1, wherein the 2D map of the plane comprises a grid (802; 804), and wherein nodes (806) on the grid (802; 804) comprise selectable positions.

3. Method (100) according to the directly preceding claim, wherein the 3D costmap comprises a natural number N of copies per node (806) of the grid (802; 804), wherein each copy comprises a differently rotated orientation of the mobile non-circular robot (300), in particular, rotated by a fraction k/N of the full angle, 2πk/N, for any integer k less than N.

4. Method (100) according to any of the preceding claims, wherein the step of iteratively selecting (S108) consecutive positions comprises applying a greedy search algorithm.

5. Method (100) according to the directly preceding claim, wherein the greedy search algorithm is selected from the group of:
- An A-star, A*, algorithm;
- A Dijkstra's algorithm; and
- A D-star-Lite, D*-Lite, algorithm.

6. Method (100) according to any of the preceding claims, further comprising at least one of the method steps of:
- Generating (S102) the 3D costmap; and
- Updating the 3D costmap responsive to a change in positions of one or more obstacles (402).

7. Method (100) according to any of the preceding claims, further comprising the method step of:
- Executing (S112), by the mobile non-circular robot (300), the output (S110) planned path (504).

8. Method (100) according to any of the preceding claims, wherein the mobile non-circular robot (300) comprises a holonomic robot (300).

9. Method (100) according to any of the preceding claims, wherein the cumulative cost value further increases with at least one of:
- A change of orientation of the mobile non-circular robot (300);
- A veering away from the end position (506), and/or from the start position (502); and
- A repeated traversal of a position along the planned path (504).

10. Method (100) according to any of the preceding claims, wherein the 3D costmap further comprises a height constraint in relation to the height of the mobile non-circular robot (300).

11. Method (100) according to any of the preceding claims, wherein determining the cumulative cost value comprises performing a weighted sum of the cost values.

12. Computing device (200) for path planning for a mobile non-circular robot (300) in an environment (400) comprising obstacles (402), comprising the computing device (200) comprising:
- A 3D costmap receiving interface (204) configured for receiving a three-dimensional, 3D, costmap, wherein the 3D costmap comprises a two-dimensional, 2D, map of a plane, in which a mobile non-circular robot (300) is movable, and wherein the 3D costmap further comprises a cost value, for each position on the 2D map, indicative of a cost of a positioning, and/or a movement, of the mobile non-circular robot (300) in the presence of one or more obstacles (402) in a predetermined environment of the position, wherein the positioning and/or movement comprises an orientation of the mobile non-circular robot (300);
- A start and end positions receiving interface (206) configured for receiving a start position (502) and an end position (506) of the mobile non-circular robot (300) on the 3D costmap, wherein the start position (502) comprises a start orientation of the mobile non-circular robot (300), and wherein the end position (506) comprises an end orientation of the mobile non-circular robot (300);
- A consecutive positions selecting module (208) configured for iteratively selecting consecutive positions for a path to be planned, starting at the received start position (502) and terminating at the received end position (506), wherein the iteratively selecting comprises minimizing a cumulative cost value of the consecutive positions, wherein the cumulative cost value comprises a sum of the cost values of the consecutive positions according to the received 3D costmap, and wherein the cumulative cost value further comprises a stress value, wherein the stress value is indicative of a change in a movement direction along the planned path (504);
- A planned path (504) outputting interface (210) configured for outputting the planned path (504) based on the iteratively selected consecutive positions, **characterized in that** the 3D costmap is based on a convex hull of a footprint of the mobile non-circular robot (300) onto the 2D map of the plane, wherein the 3D costmap is further based on a predetermined safety area around the convex hull.

13. Computing device (200) according to the directly preceding claim, wherein the computing device (200) is further configured to perform any one of the steps, or comprise any one of the features of the method claims 2 to 11.

14. System for path planning for a mobile non-circular robot (300) in an environment (400) comprising obstacles (402), the system comprising:
- A computing device (200) according to claim 12 or 13; and
- A mobile non-circular robot (300).

15. System according to the directly preceding claim, wherein the mobile non-circular robot (300) comprises at least one mecanum wheel, in particular four mecanum wheels.

16. System according to claim 14 or 15, wherein the mobile non-circular robot (300) comprises at least one sensor for collision avoidance.

17. A computer program product comprising program elements which induce a computing device (200) to carry out, when the program elements are loaded into a memory of the computing device (200), the steps of the method for path planning for a mobile non-circular robot (300) in an environment (400) comprising obstacles (402) (402) according to one of the preceding method claims.

## Patentansprüche

1. Computerimplementiertes Verfahren (100) zur Wegplanung für einen mobilen nicht-kreisförmigen Roboter (300) in einer Umgebung (400), die Hindernisse (402) aufweist, die folgenden Verfahrensschritte umfassend:
- Empfangen (S104) einer dreidimensionalen (3D)-Costmap, wobei die 3D-Costmap eine zweidimensionale, 2D-Karte einer Ebene umfasst, in der ein mobiler, nicht-kreisförmiger Roboter (300) beweglich ist, und wobei die 3D-Costmap ferner einen Kostenwert für jede Position auf der 2D-Karte umfasst, der Kosten einer Positionierung angibt, und/oder eine Bewegung des mobilen nicht-kreisförmigen Roboters (300) in Anwesenheit eines oder mehrerer Hindernisse (402) in einer vorbestimmten Umgebung der Position, wobei die Positionierung und/oder Bewegung eine Ausrichtung des mobilen nicht-kreisförmigen Roboters (300) umfasst;
- Empfangen (S106) einer Startposition (502) und einer Endposition (506) des mobilen nicht-kreisförmigen Roboters (300) auf der 3D-Costmap, wobei die Startposition (502) eine Startorientierung des mobilen nicht-kreisförmigen Roboters (300) umfasst und wobei die Endposition (506) eine Endorientierung des mobilen nicht-kreisförmigen Roboters (300) umfasst;
- Iteratives Auswählen (S108) aufeinanderfolgender Positionen für einen zu planenden Weg, beginnend an der empfangenen (S106) Startposition (502) und endend an der empfangenen (S106) Endposition (506), wobei das iterative Auswählen (S108) Minimieren eines kumulativen Kostenwerts der aufeinanderfolgenden Positionen umfasst, wobei der kumulative Kostenwert eine Summe der Kostenwerte der aufeinanderfolgenden Positionen gemäß der empfangenen (S104) 3D-Costmap umfasst, und wobei der kumulative Kostenwert ferner einen Spannungswert umfasst, wobei der Spannungswert eine Änderung in einer Bewegungsrichtung entlang des geplanten Weges angibt (504);
- Ausgeben (S110) des geplanten Weges (504) basierend auf den iterativ ausgewählten (S108) aufeinanderfolgenden Positionen, **dadurch gekennzeichnet, dass** die 3D-Costmap auf einem konvexen Rumpf einer Grundfläche des mobilen nicht-kreisförmigen Roboters (300) auf der 2D-Karte der Ebene basiert, wobei die 3D-Costmap ferner auf einem vorbestimmten Sicherheitsbereich um den konvexen Rumpf herum basiert.

2. Verfahren (100) nach Anspruch 1, wobei die 2D-Karte der Ebene ein Gitter (802; 804) umfasst, und wobei Knoten (806) auf dem Gitter (802; 804) auswählbare Positionen umfassen.

3. Verfahren (100) nach dem direkt vorhergehenden Anspruch, wobei die 3D-Costmap eine natürliche Anzahl N von Kopien pro Knoten (806) des Gitters (802; 804) umfasst, wobei jede Kopie eine unterschiedlich gedrehte Ausrichtung des mobilen nicht-kreisförmigen Roboters (300) umfasst, insbesondere um einen Bruchteil k/N des vollen Winkels, 2πk/N, für eine beliebige ganze Zahl k kleiner als N gedreht.

4. Verfahren (100) nach einem der vorhergehenden Ansprüche, wobei der Schritt des iterativen Auswählens (S108) aufeinanderfolgender Positionen das Anwenden eines Greedy-Suchalgorithmus umfasst.

5. Verfahren (100) nach dem direkt vorhergehenden Anspruch, wobei der Greedy-Suchalgorithmus ausgewählt ist aus der Gruppe von:
- einem A-Stern (A*)-Algorithmus;
- einem Dijkstra-Algorithmus; und
- einem D-Stern-Lite (D*-Lite)-Algorithmus.

6. Verfahren (100) nach einem der vorhergehenden Ansprüche, ferner umfassend mindestens einen der folgenden Verfahrensschritte:
- Erzeugen (S102) der 3D-Costmap; und
- Aktualisieren der 3D-Costmap als Reaktion auf eine Änderung der Positionen eines oder mehrerer Hindernisse (402).

7. Verfahren (100) nach einem der vorhergehenden Ansprüche, ferner umfassend den folgenden Verfahrensschritt:
- Ausführen (S112), durch den mobilen nicht-kreisförmigen Roboter (300), des geplanten Weges (504) der Ausgabe (S110).

8. Verfahren (100) nach einem der vorhergehenden Ansprüche, wobei der mobile nicht-kreisförmige Roboter (300) einen holonomischen Roboter (300) umfasst.

9. Verfahren (100) nach einem der vorhergehenden Ansprüche, wobei der kumulative Kostenwert ferner mit mindestens einem von Folgendem zunimmt:
- einer Änderung der Ausrichtung des mobilen nicht-kreisförmigen Roboters (300);
- einem Abstechen von der Endposition (506) und/oder von der Startposition (502); und
- einer wiederholten Überquerung einer Position entlang des geplanten Weges (504).

10. Verfahren (100) nach einem der vorhergehenden Ansprüche, wobei die 3D-Costmap ferner eine Höhenbeschränkung in Bezug auf die Höhe des mobilen nicht-kreisförmigen Roboters (300) umfasst.

11. Verfahren (100) nach einem der vorhergehenden Ansprüche, wobei das Bestimmen des kumulativen Kostenwertes das Durchführen einer gewichteten Summe der Kostenwerte umfasst.

12. Rechenvorrichtung (200) zur Wegplanung für einen mobilen nicht-kreisförmigen Roboter (300) in einer Umgebung (400), die Hindernisse (402) aufweist, umfassend die Rechenvorrichtung (200), die Folgendes umfasst:
- eine 3D-Costmap-Empfangsschnittstelle (204), die zum Empfangen einer dreidimensionalen (3D)-Costmap ausgelegt ist, wobei die 3D-Costmap eine zweidimensionale (2D)-Karte einer Ebene umfasst, in der ein mobiler nicht-kreisförmiger Roboter (300) beweglich ist, und wobei die 3D-Costmap ferner einen Kostenwert für jede Position auf der 2D-Karte umfasst, der die Kosten einer Positionierung angibt, und/oder eine Bewegung des mobilen nicht-kreisförmigen Roboters (300) in Anwesenheit eines oder mehrerer Hindernisse (402) in einer vorbestimmten Umgebung der Position, wobei die Positionierung und/oder Bewegung eine Ausrichtung des mobilen nicht-kreisförmigen Roboters (300) umfasst;
- eine Start- und Endpositions-Empfangsschnittstelle (206), die zum Empfangen einer Startposition (502) und einer Endposition (506) des mobilen nicht-kreisförmigen Roboters (300) auf der 3D-Costmap ausgelegt ist, wobei die Startposition (502) eine Startorientierung des mobilen nicht-kreisförmigen Roboters (300) umfasst, und wobei die Endposition (506) eine Endorientierung des mobilen nicht-kreisförmigen Roboters (300) umfasst;
- ein Modul zum Auswählen aufeinanderfolgender Positionen (208), das zum iterativen Auswählen aufeinanderfolgender Positionen für einen zu planenden Weg ausgelegt ist, beginnend an der empfangenen Startposition (502) und endend an der empfangenen Endposition (506), wobei das iterative Auswählen das Minimieren eines kumulativen Kostenwertes der aufeinanderfolgenden Positionen umfasst, wobei der kumulative Kostenwert eine Summe der Kostenwerte der aufeinanderfolgenden Positionen gemäß der empfangenen 3D-Costmap umfasst, und wobei der kumulative Kostenwert ferner einen Spannungswert umfasst, wobei der Spannungswert eine Änderung in einer Bewegungsrichtung entlang des geplanten Weges angibt (504);
- einen geplanten Weg (504), der eine Schnittstelle (210) ausgibt, die zum Ausgeben des geplanten Weges (504) basierend auf den iterativ ausgewählten aufeinanderfolgenden Positionen konfiguriert ist, **dadurch gekennzeichnet, dass** die 3D-Costmap auf einem konvexen Rumpf einer Grundfläche des mobilen nicht-kreisförmigen Roboters (300) auf der 2D-Karte der Ebene basiert, wobei die 3D-Costmap ferner auf einem vorbestimmten Sicherheitsbereich um den konvexen Rumpf herum basiert.

13. Rechenvorrichtung (200) nach dem unmittelbar vorhergehenden Anspruch, wobei die Rechenvorrichtung (200) ferner ausgelegt ist, um einen der Schritte auszuführen oder eines der Merkmale der Verfahrensansprüche 2 bis 11 zu umfassen.

14. System zur Wegplanung für einen mobilen nicht-kreisförmigen Roboter (300) in einer Umgebung (400), die Hindernisse (402) aufweist, wobei das System Folgendes umfasst:
- eine Rechenvorrichtung (200) nach Anspruch 12 oder 13; und
- einen mobilen nicht-kreisförmigen Roboter (300).

15. System nach dem unmittelbar vorhergehenden Anspruch, wobei der mobile nicht-kreisförmige Roboter (300) mindestens ein Mekanum-Rad, insbesondere vier Mekanum-Räder, umfasst.

16. System nach Anspruch 14 oder 15, wobei der mobile nicht-kreisförmige Roboter (300) mindestens einen Sensor zur Kollisionsvermeidung umfasst.

17. Computerprogrammprodukt, das Programmelemente umfasst, die eine Rechenvorrichtung (200) veranlassen, beim Laden der Programmelemente in einen Speicher der Rechenvorrichtung (200) die Schritte des Verfahrens zur Wegplanung für einen mobilen nicht-kreisförmigen Roboter (300) in einer Umgebung (400), die Hindernisse (402) (402) aufweist, gemäß einem der vorhergehenden Verfahrensansprüche auszuführen.

## Revendications

1. Procédé (100) mis en œuvre par ordinateur de planification du chemin pour un robot (300) mobile non circulaire dans un environnement (400) comprenant des obstacles (402), comprenant les stades de procédé de :
- recevoir (S104) une carte de coûts en trois dimensions, 3D, dans lequel la carte de coûts en 3D comprend une carte en deux dimensions, 2D, d'un plan, dans lequel un robot (300) mobile non circulaire peut se mouvoir, et dans lequel la carte de coûts en 3D comprend en outre une valeur de coût pour chaque position sur la carte en 2D, indiquant un coût d'un positionnement et/ou d'un mouvement du robot (300) mobile non circulaire en la présence d'un ou de plusieurs obstacles (402) dans un environnement déterminé à l'avance de la position, dans lequel la mise en position et/ou le mouvement comprend une orientation du robot (300) mobile non circulaire ;
- recevoir (S106) une position (502) de départ et une position (506) de fin du robot (300) mobile non circulaire sur la carte de coûts en 3D, dans lequel la position (502) de départ comprend une orientation de départ du robot (300) mobile non circulaire, et dans lequel la position (506) de fin comprend une orientation de fin du robot (300) mobile non circulaire ;
- sélectionner (S108) itérativement des positions consécutives pour un chemin à planifier, en partant de la position (502) de départ reçue (S106) et en terminant à la position (506) de fin reçue (S106), dans lequel la sélection (S108) par itération comprend minimiser une valeur cumulative de coût des positions consécutives, dans lequel la valeur consécutive de coût comprend une somme des valeurs de coût des positions consécutives suivant la carte de coûts en 3D reçue (S104), et dans lequel la valeur cumulative de coût comprend en outre une valeur de contrainte, dans lequel la valeur de contrainte indique un changement dans une direction de mouvement le long du chemin (504) planifié ;
- sortir (S110) le chemin (504) planifié, sur la base des positions consécutives sélectionnées (S108) par itération, **caractérisé en ce que** la carte de coûts en 3D repose sur une enveloppe convexe d'une empreinte au sol du robot (300) mobile non circulaire sur la carte en 2D du plan, dans lequel la carte de coûts en 3D repose en outre sur une zone de sécurité déterminée à l'avance autour de l'enveloppe convexe.

2. Procédé (100) suivant la revendication 1, dans lequel la carte en 2D du plan comprend un réseau (802 ; 804), et dans lequel des nœuds (806) du réseau (802 ; 804) comprennent des positions, qui peuvent être sélectionnées.

3. Procédé (100) suivant la revendication immédiatement précédente, dans lequel la carte de coûts en 3D comprend un nombre N naturel de copies par nœud (806) du réseau (802 ; 804), dans lequel chaque copie comprend une orientation différente en rotation du robot (300) mobile non circulaire, en particulier tournée d'une fraction k/N de l'angle complet 2πk/N, pour tout nombre entier k inférieur à N.

4. Procédé (100) suivant l'une des revendications précédentes, dans lequel le stade de sélection (S108) par itération de positions consécutives comprend appliquer un algorithme de recherche gourmand.

5. Procédé (100) suivant la revendication directement précédente, dans lequel l'algorithme de recherche gourmand est choisi dans le groupe de :
- un algorithme A-star, A* ;
- un algorithme de Dijkstra ; et
- un algorithme D-star-Lite, D*-Lite.

6. Procédé (100) suivant l'une quelconque des revendications précédentes, comprenant en outre au moins l'un des stades de procédé de :
- créer (S102) la carte de coûts en 3D ; et
- mettre à jour la carte de coûts en 3D en réaction à un changement des positions d'un ou des plusieurs obstacles (402).

7. Procédé (100) suivant l'une quelconque des revendications précédentes, comprenant en outre le stade de procédé :
- exécuter (S112), par le robot (300) mobile non circulaire, la sortie (S110) du chemin (504) planifié.

8. Procédé (100) suivant l'une quelconque des revendications précédentes, dans lequel le robot (300) mobile non circulaire comprend un robot (300) holonomique.

9. Procédé (100) suivant l'une quelconque des revendications précédentes, dans lequel la valeur cumulative de coût est augmentée en outre de l'un de :
- un changement d'orientation du robot (300) mobile non circulaire ;
- un éloignement de la position (506) de fin et/ou de la position (502) de départ ; et
- une traversée répétée d'une position le long du chemin (504) planifié.

10. Procédé (100) suivant l'une quelconque des revendications précédentes, dans lequel la carte de coûts en 3D comprend en outre une contrainte de hauteur en relation avec la hauteur du robot (300) mobile non circulaire.

11. Procédé (100) suivant l'une quelconque des revendications précédentes, dans lequel déterminer la valeur cumulative de coût comprend effectuer une somme pondérée des valeurs de coût.

12. Dispositif (200) informatique de planification d'un chemin pour un robot (300) mobile non circulaire dans un environnement (400) comprenant des obstacles (402), le dispositif (200) informatique comprenant :
- une interface (204) de réception d'une carte de coûts en 3D configurée pour recevoir une carte de coûts en trois dimensions, 3D, dans lequel la carte de coûts en 3D comprend une carte en deux dimensions, 2D, d'un plan, dans lequel un robot (300) mobile non circulaire peut se mouvoir, et dans lequel la carte de coûts en 3D comprend en outre une valeur de coût indiquant, pour chaque position sur la carte en 2D, un coût d'un positionnement et/ou d'un mouvement du robot (300) mobile non circulaire en la présence d'un ou de plusieurs obstacles (402) dans un environnement déterminé à l'avance de la position, dans lequel le positionnement et/ou le mouvement comprend une orientation du robot (300) mobile non circulaire ;
- une interface (206) de réception d'une position (502) de départ et d'une position (506) de fin du robot (300) mobile non circulaire sur la carte de coûts en 3D, dans lequel la position (502) de départ comprend une orientation de départ du robot (300) mobile non circulaire, et dans lequel la position (506) de fin comprend une orientation de fin du robot (300) mobile non circulaire ;
- un module (208) de sélection de positions consécutives configuré pour sélectionner par itération des positions consécutives pour un chemin à planifier en partant de la position (502) de départ reçue et en terminant à la position (506) de fin reçue, dans lequel la sélection par itération comprend minimiser une valeur cumulative de coût des positions consécutives, dans lequel la valeur consécutive de coût comprend une somme des valeurs de coût des positions consécutives suivant la carte de coûts en 3D reçue, et dans lequel la valeur cumulative de coût comprend en outre une valeur de contrainte, dans lequel la valeur de contrainte indique un changement dans une direction de mouvement le long du chemin (504) planifié ;
- une interface (210) de sortie d'un chemin (504) planifié configurée pour sortir le chemin (504) planifié sur la base des positions consécutives sélectionnées par itération, **caractérisé en ce que** la carte de coûts en 3D repose sur une enveloppe convexe d'une empreinte au sol du robot (300) mobile non circulaire sur la carte en 2D du plan, dans lequel la carte de coûts en 3D repose en outre sur une zone de sécurité déterminée à l'avance autour de l'enveloppe convexe.

13. Dispositif (200) informatique suivant la revendication directement précédente, dans lequel le dispositif (200) informatique est configuré en outre pour effectuer l'un quelconque des stades ou comprend l'une quelconque des particularités des revendications de procédé 2 à 11.

14. Système de planification de chemin pour un robot (300) mobile non circulaire dans un environnement (400) comprenant des obstacles (402), le système comprenant :
- un dispositif (200) informatique suivant la revendication 12 ou 13 ;
et
- un robot (300) mobile non circulaire.

15. Système suivant la revendication directement précédente, dans lequel le robot (300) mobile non circulaire comprend au moins une roue mecanum, en particulier quatre roues mecanum.

16. Système suivant la revendication 14 ou 15, dans lequel le robot (300) mobile non circulaire comprend au moins un capteur pour éviter une collision.

17. Un produit de programme d'ordinateur comprenant des éléments de programme, qui font qu'un dispositif (200) informatique effectue, lorsque les éléments de programme sont chargés dans une mémoire du dispositif (200) informatique, les stades du procédé de planification de chemin pour un robot (300) mobile non circulaire dans un environnement (400) comprenant des obstacles (402) (402) suivant l'une des revendications précédentes de procédé.
